# EUROPÄISCHE PATENTSCHRIFT

(11) **EP 4 278 210 B1**
(45) Veröffentlichungstag und Bekanntmachung des Hinweises auf die Patenterteilung: **03.09.2025**
(21) Anmeldenummer: 21844263.0
(22) Anmeldetag: 21.12.2021
(51) Int. Cl.: G01S 7/481, G01S 17/34, G01S 17/50, G01S 17/95

(54) **OPTISCHE VORRICHTUNG ZUR NAH- UND FERNABBILDUNG UND SYSTEME MIT EINER OPTISCHEN VORRICHTUNG**
OPTICAL DEVICE FOR NEAR AND DISTANCE IMAGING, AND SYSTEMS HAVING AN OPTICAL DEVICE
DISPOSITIF OPTIQUE POUR L'IMAGERIE PROCHE ET À DISTANCE ET SYSTÈMES COMPRENANT UN DISPOSITIF OPTIQUE

(30) Priorität: 15.01.2021 DE 102021100788
(43) Veröffentlichungstag der Anmeldung: 22.11.2023
(73) Patentinhaber: Deutsches Zentrum für Luft- und Raumfahrt e.V., 53227 Bonn (DE)
(72) Erfinder: LORBEER, Raoul-Amadeus, 71106 Magstadt (DE); KLIEBISCH, Oliver, 71083 Herrenberg (DE); MAHNKE, Peter, 70195 Stuttgart (DE); MILLER, Nico, 70569 Stuttgart (DE)
(74) Vertreter: RPK Patentanwälte Reinhardt und Kaufmann Partnerschaft mbB
(86) Internationale Anmeldenummer: PCT/EP2021/087070
(87) Internationale Veröffentlichungsnummer: WO 2022/152526

(56) Entgegenhaltungen:
- DE-A1- 102018 209 394
- DAI CUIXIA ET AL: "Optical coherence tomography for whole eye segment imaging", OPTICS EXPRESS, vol. 20, no. 6, 12 March 2012 (2012-03-12), US, pages 6109, XP055903860, ISSN: 2161-2072, DOI: 10.1364/OE.20.006109
- THOMAS O H CHARRETT ET AL: "TOPICAL REVIEW;Optical fibre laser velocimetry: a review;Topical Review", MEASUREMENT SCIENCE AND TECHNOLOGY, IOP, BRISTOL, GB, vol. 23, no. 3, 23 January 2012 (2012-01-23), pages 32001, XP020219564, ISSN: 0957-0233, DOI: 10.1088/0957-0233/23/3/032001
- KLIEBISCH OLIVER ET AL: "Design of an airborne multi-channel laser Doppler anemometer for real-time wind vector measurements", OPTICAL SENSORS AND SENSING CONGRESS, 1 January 2020 (2020-01-01), Washington, D.C., pages SM1B.3, XP055903866, ISBN: 978-1-943580-78-1, Retrieved from the Internet <URL:https://opg.optica.org/DirectPDFAccess/A6C4CC1D-F69B-4414-B8217741A7F658A8_438347/Sensors-2020-SM1B.3.pdf?da=1&id=438347&uri=Sensors-2020-SM1B.3&seq=0&mobile=no> [retrieved on 20220322], DOI: 10.1364/SENSORS.2020.SM1B.3

## Beschreibung

### Stand der Technik

Die Erfindung betrifft eine optische Vorrichtung zur Nah- und Fernabbildung, ein System mit einer optischen Vorrichtung für Laser-Doppler-Anemometrie, ein System für LIDAR-Messungen und ein System für kombinierte Laser-Doppler-Anemometrie und LIDAR-Messungen, insbesondere frequenzmodulierte Dauerstrich-LIDAR-Messungen.

Lidar-Systeme werden häufig im Fahrzeugbereich eingesetzt. Aus der US 2015/146189 A1 ist eine optische Vorrichtung für ein LIDAR-System für ein Fahrzeug mit Sende- und Empfangseinheit und einer optischen Linse bekannt, welche das Sende- und Empfangslicht für unterschiedliche Bildabstände im Nahbereich fokussiert.

Aus der DE 10 2018 209394A1 ist eine optische Vorrichtung mit Sende- und Empfangseinheiten bekannt, bei der jeweils alle Sender in einer Ebene und jeweils alle Empfänger in einer anderen Ebene angeordnet sind.

Aus der US8836922B1 ist eine optische Vorrichtung für ein LIDAR-System für ein Fahrzeug bekannt, mit einer Vielzahl von Sende- und Empfangseinheiten, die in verschiedenen Abständen zu einer Linse angeordnet sind und die in einer gemeinsamen Abbildungsebene abgebildet werden.

Bei Mehrkanal-Laser-Doppler-Anemometrie (LDA)-Systemen ist es üblich, für jeden LDA-Kanal ein eigenständiges optisches System einzusetzen. Durch das Aufspannen eines kleinen Winkels im Bereich von 10° bis 30° zwischen den einzelnen optischen Systemen lassen sich so beispielsweise Windgeschwindigkeit und Windrichtung ermitteln.

Mehrkanal-LDA-Systeme werden kommerziell an Windradanlagen und Flughäfen eingesetzt. Die Technik ist zudem eine übliche Diagnostik-Methode an Windkanälen und Verbrennungstechnik-Prüfständen. Weiterhin existieren wissenschaftliche Untersuchungen zum Einsatz an/in Flugzeugen.

Frequenzmoduliertes Dauerstrich-LIDAR-Systeme (FMCW-LIDAR= Frequency Modulated Continuous Wave LIght Detection And Ranging) setzen Laser mit ähnlichen optischen Systemen wie bei LDA üblich ein.

Bei einem Referenzstrahl-LDA-System wird ein spektral sehr schmalbandiger Laserstrahl in einen Referenzstrahl und einen Messstrahl aufgeteilt. Der Messstrahl wird in die Luft fokussiert, um dort an Teilchen (Aerosolen) zu streuen. Die Frequenz des zurückgestreuten Lichts ist durch die Eigenbewegung der Aerosole dopplerverschoben. Das zurückgestreute Licht wird optisch aufgesammelt und mit dem Referenzlaserstrahl zur Interferenz gebracht. Dies erzeugt ein zur Geschwindigkeit proportionales Schwebungssignal als Intensitätsmodulation. Darüber lässt sich die Aerosolbewegung und damit auch die Windgeschwindigkeit messen.

Bei einem FMCW-LIDAR-System wird die Laserquelle zusätzlich über die Zeit hinweg dreiecksförmig frequenzmoduliert. Hierbei wird der Strahl wieder in Messstrahl und Referenzstrahl aufgeteilt. Der Messstrahl wird typischerweise kollimiert. Die an einer Oberfläche gestreuten Photonen werden wieder eingefangen und mit dem Referenzstrahl überlagert. Die Bewegung des Objekts äußert sich in einem unterschiedlichen Vorzeichen der Dopplerfrequenzverschiebung für die beiden Rampen der Dreiecksmodulation. Dies erlaubt die Trennung des Frequenzanteils, aus dem sich der Abstand des Objekts bestimmen lässt, vom Anteil, der die relative Bewegung, d.h. die Geschwindigkeit des Objektes ausdrückt.

Die beiden Messverfahren LDA und FMCW LIDAR ähneln einander und ergänzen sich in ihrer Aussagekraft.

Aus der Veröffentlichung von Dai Cuixia et al. "Optical coherence tomography for whole eye segment imaging", Optics Express, Bd. 20, Nr. 6, 12. März 2012 (2012-03-12), S. 6109, XP055903860, US, ISSN: 2161-2072, DOI: 10.1364/0E.20.006109 ist eine optische Vorrichtung zur optische Kohärenztomographie mit doppeltem Fokus und zwei Kanälen für die gleichzeitige Abbildung der gesamten Augensegmente von der Hornhaut bis zur Netzhaut bekannt. Durch die Verwendung eines Doppelfokus löste das System das Problem der gleichzeitigen Lichtfokussierung auf den vorderen Augenabschnitt und die Netzhaut. Dies wird erreicht, indem die Kollimationslinsen so eingestellt werden, dass die Divergenz der beiden Untersuchungsstrahlen so abgestimmt ist, dass sie in unterschiedlichen Tiefen des Auges fokussiert wird.

### Offenbarung der Erfindung

Die Aufgabe der Erfindung ist es, eine kompakte optische Vorrichtung zur Nah- und Fernabbildung zu schaffen.

Eine weitere Aufgabe ist es, ein System für Laser-Doppler-Anemometrie mit einer kompakten optischen Vorrichtung zu schaffen.

Eine weitere Aufgabe ist es, ein System für frequenzmoduliertes Dauerstrich-LIDAR mit einer kompakten optischen Vorrichtung zu schaffen.

Eine weitere Aufgabe ist es, ein System für kombinierte Laser-Doppler-Anemometrie und frequenzmoduliertes Dauerstrich-LIDAR-Messungen mit einer kompakten optischen Vorrichtung zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird eine optische Vorrichtung zur Nah- und Fernabbildung vorgeschlagen, umfassend eine optische Einheit mit wenigstens einer ersten optischen Linse und wenigstens einer zweiten optischen Linse, wobei die wenigstens eine erste optische Linse und wenigstens eine zweite optische Linse entlang einer optischen Achse angeordnet sind. Weiter umfasst die optische Vorrichtung eine Sende- und Empfangseinheit mit wenigstens einem, insbesondere im Wesentlichen punktförmigen, Sende- und Empfangselement zum Aussenden und Empfangen von Lichtstrahlen durch die optische Einheit, wobei eine Lichtdurchtrittsfläche des wenigstens einen Sende- und Empfangselements in wenigstens einer ebenen oder gewölbten Fläche angeordnet ist oder diese schneidet. Die optische Einheit ist als ringförmig wiederabbildende Optik ausgebildet.

Entlang der optischen Achse ist ein erster Abstand zwischen einer ersten Fläche der wenigstens einen Fläche und der wenigstens einen ersten optischen Linse so eingestellt vorgesehen, dass im bestimmungsgemäßen Normalbetrieb mehr als ein Sende- und Empfangselement der Sende- und Empfangseinheit von der optischen Einheit auf eine entfernte Abbildungsfläche abgebildet ist.

Die Sende- und Empfangselemente sind auf der ersten Fläche in einem radialen Abstand zu der optischen Achse angeordnet, welcher wenigstens 30% eines halben Radius einer Apertur der ausgesendeten Lichtstrahlen an der zweiten optischen Linse entspricht.

Der radiale Abstand kann vorzugsweise wenigstens 35%, besonders bevorzugt wenigstens 40%, ganz besonders bevorzugt wenigstens 45% des halben Radius einer Apertur der ausgesendeten Lichtstrahlen an der zweiten optischen Linse entsprechen. Insbesondere kann der radiale Abstand ungefähr dem halben Radius der Apertur der ausgesendeten Lichtstrahlen an der zweiten optischen Linse entsprechen.

Durch die ringförmige Wiederabbildung kann vorteilhaft ein Mehrkanal-LDA-System mit einem kompakten Aufbau von optischer Vorrichtung und Sende- und Empfangselementen erreicht werden. Außerdem lässt sich vorteilhaft die Anzahl der LDA-Kanäle bei geringen Mehrkosten steigern.

Durch den radialen Abstand können für ein Mehrkanal-LDA-System beispielsweise mehrere Faserenden von Lichtleitfasern, welche das Licht eines Lasers übertragen und das eigentliche Sende- und Empfangselement darstellen, versetzt über eine Linse abgebildet werden. Die Sende- und Empfangselemente leuchten die erste Linse mit Lichtkegeln aus, die im Wesentlichen parallel zu der optischen Achse verlaufen. Eine leichte Neigung ist hierbei tolerabel. Vorteilhaft ist, wenn die Strahlen die erste Linse nicht zentral beleuchten, sondern mit einem radialen Abstand.

Durch das versetzte Durchleuchten der ersten Linse werden asymmetrische Abbildungsfehler herbeigeführt, die typischerweise spiegelsymmetrisch zu der durch optische Achse und Faseraustritt definierten Fläche ausgebildet sind. Daher sind diese asymmetrischen Fehler, wie beispielsweise Astigmatismus oder Koma, für jede Abbildung gedreht.

Die erfindungsgemäße optische Vorrichtung besteht aus möglichst wenigen Komponenten, nämlich wenigstens zwei optischen Linsen, die eine Wiederfokussierung von Licht in einem kegelförmigen Abbildungsbereich bei essentiell beugungsbegrenzter Abbildungsqualität ermöglichen. Die zwei optischen Linsen können bevorzugt als asphärische Linsen ausgebildet sein. So können vorteilhaft mehrere LDA-Optikeinheiten in einem optischen System zusammengefasst werden, wodurch sich die LDA-Kanalzahl kostengünstig erhöhen lässt.

Dies ist speziell bei Mehrkanal-LDA-Systemen von Relevanz. Im Gegensatz zum Stand der Technik, wo üblicherweise für das Mehrkanal-LDA mehrere meist große Optikeinheiten notwendig sind, kann die vorgeschlagene optische Vorrichtung für mehrere LDA-Kanäle kompakt aufgebaut werden. Ebenso kann die Anzahl der LDA-Kanäle vorteilhaft ohne großen Aufwand gesteigert werden, da nicht für jeden LDA-Kanal eine teure und große Optikeinheit nötig ist. Auf diese Weise kann mit einer optischen Vorrichtung ein Messsystem für LDA mit vielen LDA-Kanälen realisiert werden.

Vorteilhaft lässt sich so ein LDA-System über einen großen Winkelbereich realisieren. Bei einem LDA-System beispielsweise mit einer 25 mm Austrittsapertur sind so über einen Winkelbereich von +/-10° Strehl-Verhältnisse größer 0,8 möglich, wobei das Strehl-Verhältnis das Verhältnis der beobachteten maximalen Intensität einer Punktquelle in der Bildebene zur theoretischen maximalen Intensität einer perfekten beugungsbegrenzten optischen Vorrichtung darstellt. Eine perfekt abbildende Vorrichtung hätte ein Strehl-Verhältnis von 1,0.

Die wenigstens eine ebene oder gewölbte Fläche, in der die Lichtdurchtrittsflächen der Sende- und Empfangselemente angeordnet sind, oder diese schneiden, kann die optische Achse der optischen Vorrichtung schräg oder senkrecht schneiden.

Die Entfernung, insbesondere der erste und/oder zweite Abstand, zur Abbildungsfläche ist von der konkreten Anwendung abhängig. Bei kohärenter Laser-Doppler-Anemometrie LDA an einzelnen Streuern sind Abstände von einigen zehn Zentimetern bis hin zu wenigen Metern üblich. Wind-Lidar Systeme decken Abstände von knapp 100 m bis hin zu einigen km ab.

Das "Navigations-Doppler-Lidar" (NDL) wird bei der NASA für das robotische Landen auf anderen Himmelskörpern untersucht, wodurch Abstände bis hin zu einigen 10 km üblich sind. Stand der Technik ist hier die Nutzung mehrerer unterschiedlich ausgerichteter Fokussier- und/oder Kollimationsoptiken, was durch die Erfindung in einem einzigen optischen System gelöst werden kann.

Nach einer günstigen Ausgestaltung kann entlang der optischen Achse ein zum ersten Abstand verschiedener zweiter Abstand zwischen einer zweiten Fläche der wenigstens einen Fläche wenigstens eines weiteren der Sende- und Empfangselemente und der wenigstens einen ersten optischen Linse so eingestellt vorgesehen sein, dass im bestimmungsgemäßen Normalbetrieb der von dem wenigstens einen weiteren Sende- und Empfangselement ausgesendete Lichtstrahl zumindest nach der zweiten Linse kollimiert ausgebildet ist.

Es können mehrere Sende- und Empfangselemente mit dem ersten Abstand vorgesehen sein. Ebenso können mehrere Sende- und Empfangselemente mit dem zweiten Abstand vorgesehen sein. Vorteilhaft bietet das System eine nahezu beugungsbegrenzte Abbildungsqualität, insbesondere für "verkippte" Strahlen. Dies ist gerade bei kohärenten Verfahren wie LDA oder FMCW günstig, um die Signalstärke zu maximieren, da diese konfokal arbeiten.

Nach einer günstigen Ausgestaltung der optischen Vorrichtung können mehrere Sende- und Empfangselemente vorgesehen sein, die auf den wenigstens zwei, entlang der optischen Achse verschiedenen Flächen angeordnet sind, wobei der zweite Abstand geringer ist als der erste Abstand.

Vorteilhaft ist es möglich, die Sende- und Empfangselemente auf gewölbten oder ebenen Flächen anzuordnen. Dies gestattet eine nahezu beugungsbegrenzte Abbildung der kollimierten Strahlen ins Unendliche. So kann beispielsweise ein FMCW LIDAR-System über einen großen Winkelbereich hinweg realisiert werden. Bei einem FMCW LIDAR-System beispielsweise mit einer Austrittsapertur von 25 mm sind so über einen Winkelbereich von +/-10° Strehl-Verhältnisse größer 0,9 möglich.

Dies bedeutet, dass vorteilhaft mit derselben optischen Einheit ein FMCW LIDAR-Kanal zentral kollimiert und mehrere LDA-Kanäle gegeneinander geneigt refokussierend abgebildet werden können.

Eine solche Kombination für LDA als auch FMCW LIDAR weist den Vorteil auf, dass zwischen den beiden Verfahren die optische Vorrichtung nicht umgeschaltet werden muss. Damit sind vorteilhaft simultane Messungen mit LDA als auch FMCW LIDAR möglich.

Nach einer günstigen Ausgestaltung der optischen Vorrichtung kann die wenigstens eine Fläche, in welcher die Lichtdurchtrittsflächen der Sende- und Empfangselemente angeordnet sind, gewölbt ausgebildet und von der optischen Einheit weg gekrümmt sein. Eine Bildfeldwölbung der optischen Vorrichtung ist zu der Sende- und Empfangseinheit hin und von der optischen Einheit weg gekrümmt. Alternativ kann die wenigstens eine Fläche eben ausgebildet sein. Insbesondere kann die wenigstens eine ebene Fläche senkrecht zu der optischen Achse angeordnet sein.

Die Sende- und Empfangselemente können beispielsweise auf einer gewölbten oder ebenen Fläche schräg, insbesondere senkrecht zu der optischen Achse angeordnet sein. Von einer gewölbten Fläche aus kann eine nahezu beugungsbegrenzte Wiederabbildung der Sende- und Empfangselemente erfolgen. Liegen die Sende- und Empfangselemente auf einer gewölbten Fläche, so liegen die Abbildungen der Sende- und Empfangselemente ebenfalls auf einer gewölbten Abbildungsfläche. Liegen die Sende- und Empfangselemente auf einer ebenen Fläche, so können die Abbildungen der Sende- und Empfangselemente je nach Güte der optischen Einheit auf einer ebenen oder auch gewölbten Abbildungsfläche liegen.

Nach einer günstigen Ausgestaltung der optischen Vorrichtung können Schnittpunkte der Lichtdurchtrittsflächen der Sende- und Empfangselemente mit der wenigstens einen gewölbten Fläche in einer Ebene angeordnet sein. Insbesondere kann dabei die Ebene mit den Schnittpunkten die gewölbte Fläche an einem auf der optischen Achse liegenden Scheitelpunkt berühren.

In einer bevorzugten Ausführungsform können die Sende- und Empfangselemente jeweils auf einer der Schnittlinien einer flachen Ebene mit den gewölbten Flächen für die Sende- und Empfangselemente in den beiden Abständen für wiederabbildende und kollimierte Lichtstrahlen liegen. So können Sende- und Empfangselemente für ein LDA-System auf einem Kreis angeordnet werden und ein Sende- und Empfangselement für ein FMCW LIDAR-System zentral auf einem Punkt der optischen Achse. Beide Abbildungsbedingungen können vorteilhaft in einem gegebenen Sichtfeld nahezu beliebig kombiniert werden, um ein monolithisches LDA und/oder LIDAR-System zu erhalten. Ein System, bei dem die Sende- und Empfangselemente für beide Verfahren jeweils in einer Ebene liegen, stellt dabei ein Ausführungsbeispiel dar.

Vorteilhaft können die von den Sende- und Empfangselementen ausgesendeten Lichtstrahlen Lichtkegel bilden, welche sich in einem Abbildungsbereich auf einer von der Sende- und Empfangseinheit abgewandten Seite der optischen Einheit im Durchmesser verjüngen. Mittels der wenigsten zwei optischen Linsen kann vorteilhaft eine Wiederfokussierung von Licht in einem kegelförmigen Abbildungsbereich bei essentiell beugungsbegrenzter Abbildungsqualität erreicht werden. Die optischen Linsen sind dabei bevorzugt als asphärische Linsen ausgebildet.

Nach einer günstigen Ausgestaltung der optischen Vorrichtung kann die optische Einheit zur beugungsbegrenzten Abbildung der Sende- und Empfangselemente ausgebildet sein. Damit können beispielsweise vorteilhaft mit derselben optischen Einheit ein FMCW LIDAR-Kanal zentral kollimiert und mehrere LDA-Kanäle gegeneinander geneigt refokussierend abgebildet werden.

Alternativ oder zusätzlich kann die optische Einheit als zentral kollimierende Optik ausgebildet sein. Insbesondere kann dabei die optische Einheit zur beugungsbegrenzten Abbildung der Sende- und Empfangselemente ausgebildet sein. Damit können beispielsweise vorteilhaft mit derselben optischen Einheit ein FMCW LIDAR-Kanal zentral kollimiert und mehrere LDA-Kanäle gegeneinander geneigt refokussierend abgebildet werden.

Nach einer günstigen Ausgestaltung der optischen Vorrichtung können wenigstens einige der Sende- und Empfangselemente auf der wenigstens einen Fläche kreisförmig mit einem Radius zu der optischen Achse angeordnet sein, welcher wenigstens 30%, vorzugsweise wenigstens 35%, besonders bevorzugt wenigstens 40%, ganz besonders bevorzugt wenigstens 45% eines halben Radius einer Apertur der ausgesendeten Lichtstrahlen an der zweiten optischen Linse entsprechen kann, insbesondere ungefähr einem halben Radius der Apertur der ausgesendeten Lichtstrahlen an der zweiten optischen Linse.

Für ein Mehrkanal-LDA-System können beispielsweise mehrere Faserenden von Lichtleitfasern, welche das Licht eines Lasers übertragen und das eigentliche Sende- und Empfangselement darstellen, versetzt über eine Linse abgebildet werden. Die Sende- und Empfangselemente leuchten die erste Linse mit Lichtkegeln aus, die im Wesentlichen parallel zu der optischen Achse verlaufen. Eine leichte Neigung ist hierbei tolerabel. Vorteilhaft ist, wenn die Strahlen die erste Linse nicht zentral beleuchten, sondern mit einem radialen Abstand.

Durch das versetzte Durchleuchten der ersten Linse werden asymmetrische Abbildungsfehler herbeigeführt, die typischerweise spiegelsymmetrisch zu der durch optische Achse und Faseraustritt definierten Fläche ausgebildet sind. Daher sind diese asymmetrischen Fehler, wie beispielsweise Astigmatismus oder Koma, für jede Abbildung gedreht.

Nach einer günstigen Ausgestaltung der optischen Vorrichtung kann der jeweils ausgesendete Lichtkegel eines der Sende- und Empfangselemente die wenigstens eine erste optische Linse auf einer Hälfte ihres Querschnitts, insbesondere zwischen Rand und optischer Achse, beleuchten.

Um einen asymmetrischen Fehler durch das schräge Durchleuchten der ersten Linse zu korrigieren, kann eine asphärische Linse genutzt werden, die von den Lichtkegeln der einzelnen Fasern zunächst nur auf einer Hälfte beleuchtet wird. So können wieder genau entlang der durch die optische Achse und den Faserausgang definierten Fläche asymmetrische Abbildungsfehler aufgeprägt werden. Diese können nun durch die Wahl der asphärischen Parameter so gewählt werden, dass sie die asymmetrischen Fehler der zweiten Linse kompensieren.

Nach einer günstigen Ausgestaltung der optischen Vorrichtung kann ein Abstand zwischen der wenigstens einen zweiten optischen Linse und der wenigstens einen ersten optischen Linse so eingestellt vorgesehen sein, dass die Lichtkegel der Sende- und Empfangselemente ausgehend von der ersten optischen Linse die zweite optische Linse sich überdeckend zentral durchqueren, insbesondere mit einem hohen Füllfaktor von mindestens 50%, bevorzugt von mindestens 70%, besonders bevorzugt von mindestens 90%, durchqueren. Hierbei können die Lichtkegel der Sende- und Empfangselemente vorteilhaft die zweite Linse essentiell zentral und mit einem hohen Füllfaktor durchqueren. Damit können die asymmetrischen Fehler der zweiten Linse günstig kompensiert werden.

Nach einer günstigen Ausgestaltung der optischen Vorrichtung kann die wenigstens eine erste optische Linse asphärische Parameter aufweisen, mit denen asymmetrische Abbildungsfehler der wenigstens einen zweiten optischen Linse bei einer Abbildung der Sende- und Empfangselemente kompensiert sind.

Um einen asymmetrischen Fehler durch das versetzte Durchleuchten der ersten Linse zu korrigieren, kann eine asphärische Linse als erste optische Linse genutzt werden, die von den Lichtkegeln der einzelnen Fasern zunächst nur auf einer Hälfte beleuchtet wird.

So können wieder genau entlang der durch die optische Achse und den Faserausgang definierten Fläche asymmetrische Abbildungsfehler aufgeprägt werden. Diese können nun durch die Wahl der asphärischen Parameter so gewählt werden, dass sie die asymmetrischen Fehler der zweiten Linse kompensieren.

Alternativ oder zusätzlich kann die wenigstens eine zweite optische Linse asphärische Parameter aufweisen, mit denen bei der Abbildung der Sende- und Empfangselemente durch die wenigstens eine erste optische Linse entstehende rotationssymmetrische Abbildungsfehler bei einer Abbildung der Sende- und Empfangselemente durch die wenigstens eine zweite optische Linse kompensiert sind.

Die erste Linse der optischen Einheit kann vorteilhaft versetzt durchleuchtet werden. Durch die Asphäre der ersten Linse können so asymmetrische Linsenfehler aufgeprägt werden und der Lichtstrahl wird zur zweiten Linse abgeknickt. Unter Asphäre wird dabei eine optische Linse mit mindestens einer von einer Kugelform oder planen Form abweichenden brechenden Oberfläche verstanden.

Die zweite Linse wird schräg durchleuchtet und hätte normalerweise Linsenfehler durch den schrägen Lichteinfall. Diese werden allerdings durch die erste Asphäre vorweggenommen, so dass sie final kompensiert werden können.

Nun verbleiben rotationssymmetrische Fehler, die durch die Nutzung einer zweiten Asphäre als zweite Linse kompensiert werden können.

Bei der Korrektur der asymmetrischen Fehler der zweiten optischen Linse durch die schräge Ausleuchtung der ersten optischen Linse durch die Lichtkegel verbleiben lediglich rotationssymmetrische Abbildungsfehler.

Um diese zu beheben kann nun die zweite optische Linse auch noch als asphärische optische Linse ausgelegt sein. Somit können bei der erfindungsgemäßen optischen Vorrichtung sowohl rotationssymmetrische als auch asymmetrische Abbildungsfehler vorteilhaft kompensiert werden.

Nach einer günstigen Ausgestaltung der optischen Vorrichtung kann wenigstens ein Sende- und Empfangselement der Sende- und Empfangseinheit vorgesehen sein, dessen Lichtdurchtrittsfläche die optische Achse schneidet und im zweiten Abstand zu der ersten optischen Linse angeordnet ist, wobei der Lichtstrahl der Sende- und Empfangselemente nach Durchlaufen der optischen Einheit kollimiert in Richtung der optischen Achse ausgebildet ist.

Die Linsenkombination des erfindungsgemäßen optischen Vorrichtung ermöglicht es beispielsweise, eine zentral platzierte Lichtleitfaser etwas dichter an der ersten optischen Linse zu positionieren und dabei wieder einen nahezu beugungsbegrenzten kollimierten Lichtstrahl zu generieren. Dies bedeutet, dass vorteilhaft mit derselben optischen Einheit ein FMCW LIDAR-Kanal zentral kollimiert und mehrere LDA-Kanäle gegeneinander geneigt refokussierend abgebildet werden können.

Eine solche Kombination für LDA als auch FMCW LIDAR weist den Vorteil auf, dass zwischen den beiden Verfahren die optische Vorrichtung nicht umgeschaltet werden muss. Damit sind vorteilhaft simultane Messungen mit LDA als auch FMCW LIDAR möglich. Ein System, bei dem die Sende- und Empfangselemente für beide Verfahren jeweils in einer Ebene liegen, stellt dabei ein bevorzugtes Ausführungsbeispiel dar.

Nach einer günstigen Ausgestaltung der optischen Vorrichtung können die Sende- und Empfangselemente zur Durchführung eines frequenzmodulierten Dauerstrich-LIDAR-Verfahrens ausgebildet sein.

Dies bedeutet, dass vorteilhaft mit derselben optischen Einheit ein FMCW LIDAR-Kanal zentral kollimiert und mehrere LDA-Kanäle gegeneinander geneigt refokussierend abgebildet werden können.

Eine solche Kombination für LDA als auch FMCW LIDAR weist den Vorteil auf, dass zwischen den beiden Verfahren das optische System nicht umgeschaltet werden muss. Damit sind vorteilhaft simultane Messungen mit LDA als auch FMCW LIDAR möglich.

Nach einer günstigen Ausgestaltung der optischen Vorrichtung kann die ebene oder gekrümmte Fläche, in welcher die Lichtdurchtrittsflächen der Sende- und Empfangselemente angeordnet ist, die optische Achse schräg, insbesondere unter einem Winkel zwischen 1° und 89°, schneiden. Vorteilhaft kann die Fläche jedoch auch senkrecht zur optischen Achse angeordnet sein und rotationssymmetrisch zur optischen Achse ausgebildet sein. Dadurch ergeben sich einfache optische Abbildungsverhältnisse.

Nach einer günstigen Ausgestaltung der optischen Vorrichtung können die Sende- und Empfangselemente als Lichtdurchtrittsflächen abgeschrägte Enden von Lichtleitfasern aufweisen. Beispielsweise kann dabei eine Normale auf die Lichtdurchtrittsfläche einer Lichtleitfaser jeweils einen Winkel von weniger als 10°, insbesondere von höchstens 8°, gegen eine Längsachse der jeweiligen Lichtleitfaser aufweisen. Die Längsachse der Lichtleitfasern kann dabei vorteilhaft wenige Grad gegen die optische Achse der optischen Vorrichtung geneigt sein, um die vorgeschlagene Ausleuchtung der ersten optischen Linse zu erreichen. So kann die Längsachse beispielsweise weniger als 10°, insbesondere höchstens 4° gegen die optische Achse geneigt sein.

Vorteilhaft kann die Sende- und Empfangseinheit als Array von Lichtleitfasern ausgebildet sein. Anstatt die Lichtleitfasern als einzelne Fasern separat in einer Faserhalterung anzuordnen, ist es günstigerweise auch möglich, ein Array von Lichtleitfasern einzusetzen. Dabei sind die Lichtleitfasern zweckmäßig und kompakt gehalten und können vorteilhaft zusammen in der optischen Vorrichtung ausgerichtet werden.

Vorteilhaft kann die optische Vorrichtung zur Nah- und Fernabbildung eine optische Einheit, die entlang der optischen Achse wenigstens eine erste optische Linse und wenigstens eine zweite optische Linse aufweisen. Die optische Vorrichtung kann eine Sende- und Empfangseinheit mit wenigstens zwei, insbesondere im Wesentlichen punktförmigen, Sende- und Empfangselementen zum Aussenden und Empfangen von Lichtstrahlen durch die optische Einheit umfassen. Dabei kann wenigstens ein Lichtstrahl, insbesondere eines Lasersystems, in einen Referenzstrahl und einen Messstrahl aufgespalten werden. Der Messstrahl kann von den Sende- und Empfangselementen über die optische Einheit ausgesendet und auf eine Abbildungsebene fokussiert werden.

Ein weiterer Lichtstrahl, insbesondere des Lasersystems, kann ebenfalls in einen Referenzstrahl und einen Messstrahl aufgespalten und der Messstrahl von dem wenigstens einen anderen Sende- und Empfangselements kollimiert parallel zur optischen Achse der optischen Vorrichtung in Richtung der Abbildungsebene gesendet werden. Die Sende- und Empfangselemente des einen Lichtstrahls und des weiteren Lichtstrahls können so angeordnet sein, dass der weitere Lichtstrahl näher zur ersten Linse ausgesendet und empfangen wird als der eine Lichtstrahl. Günstigerweise kann das Sende- und Empfangselement des weiteren Lichtstrahls im Wesentlichen in der optischen Achse angeordnet sein und Sende- und Empfangselemente des einen Lichtstrahls auf einem Kreis um die optische Achse angeordnet sein.

In der Abbildungsebene gestreutes Licht beider Lichtstrahlen kann von der optischen Einheit wieder zurück auf die jeweiligen Sende- und Empfangselemente abgebildet werden, von wo die dort empfangenen Lichtstrahlen zu optischen Detektoren der jeweiligen Sende- und Empfangselemente geleitet, mit den jeweiligen Referenzstrahlen überlagert und analysiert werden können.

Nach einem weiteren Aspekt der Erfindung wird ein System für Laser-Doppler-Anemometrie vorgeschlagen, wenigstens umfassend eine optische Vorrichtung zur Nah- und Fernabbildung wie oben beschrieben.

Insbesondere umfasst das System für Laser-Doppler-Anemometrie eine optische Vorrichtung zur Nah- und Fernabbildung, umfassend eine optische Einheit mit wenigstens einer ersten optischen Linse und wenigstens einer zweiten optischen Linse, wobei die wenigstens eine erste optische Linse und wenigstens eine zweite optische Linse entlang einer optischen Achse angeordnet sind.

Weiter umfasst die optische Vorrichtung eine Sende- und Empfangseinheit mit wenigstens einem, insbesondere im Wesentlichen punktförmigen, Sende- und Empfangselement zum Aussenden und Empfangen von Lichtstrahlen durch die optische Einheit, wobei die Lichtdurchtrittsflächen der Sende- und Empfangselemente auf wenigstens einer ebenen oder gewölbten Fläche angeordnet sind, oder diese schneiden. Entlang der optischen Achse ist ein erster Abstand zwischen der wenigstens einen Fläche und der wenigstens einen ersten optischen Linse so eingestellt vorgesehen, dass im bestimmungsgemäßen Normalbetrieb die Sende- und Empfangselemente der Sende- und Empfangseinheit von der optischen Einheit auf eine entfernte Abbildungsfläche abgebildet sind.

Das erfindungsgemäße System besteht vorteilhaft aus möglichst wenigen Komponenten, nämlich aus einer optischen Vorrichtung mit wenigstens zwei asphärischen optischen Linsen, die eine Wiederfokussierung von Licht in einem kegelförmigen Abbildungsbereich bei essentiell beugungsbegrenzter Abbildungsqualität ermöglichen. So können mehrere LDA-Optikeinheiten in einer optischen Vorrichtung zusammengefasst werden, wodurch sich die LDA-Kanalzahl kostengünstig erhöhen lässt.

Dies ist speziell bei Mehrkanal-LDA-Systemen von Relevanz. Das vorgeschlagene System kann für mehrere LDA-Kanäle kompakt aufgebaut werden. Ebenso kann die Anzahl der LDA-Kanäle vorteilhaft ohne großen Aufwand gesteigert werden, da nicht für jeden LDA-Kanal eine teure und große Optikeinheit nötig ist. Auf diese Weise kann ein Messsystem für LDA mit vielen LDA-Kanälen realisiert werden.

Nach einem weiteren Aspekt der Erfindung wird ein System für LIDAR-Messungen vorgeschlagen, wenigstens umfassend eine optische Vorrichtung zur Nah- und Fernabbildung wie vorstehend beschrieben.

Insbesondere umfasst das System für LIDAR-Messungen eine optische Vorrichtung zur Nah- und Fernabbildung, umfassend eine optische Einheit mit wenigstens einer ersten optischen Linse und wenigstens einer zweiten optischen Linse, wobei die wenigstens eine erste optische Linse und wenigstens eine zweite optische Linse entlang einer optischen Achse angeordnet sind. Weiter umfasst die optische Vorrichtung eine Sende- und Empfangseinheit mit wenigstens einem, insbesondere im Wesentlichen punktförmigen, Sende- und Empfangselement zum Aussenden und Empfangen von Lichtstrahlen durch die optische Einheit, wobei eine Lichtdurchtrittsfläche der wenigstens eine Sende- und Empfangselement auf wenigstens einer ebenen oder gewölbten Fläche angeordnet ist, oder diese schneidet.

Entlang der optischen Achse ist ein zweiter Abstand zwischen der wenigstens einen Fläche des wenigstens einen Sende- und Empfangselements und der wenigstens einen ersten optischen Linse so eingestellt vorgesehen, dass im bestimmungsgemäßen Normalbetrieb der von dem wenigstens einen Sende- und Empfangselement ausgesendete Lichtstrahl zumindest nach der zweiten Linse kollimiert ausgebildet ist.

Vorteilhaft ist es möglich, die Sende- und Empfangselemente auf gewölbten oder ebenen Flächen anzuordnen. Dies gestattet eine nahezu beugungsbegrenzte Abbildung der kollimierten Strahlen ins Unendliche. So kann beispielsweise ein LIDAR-System über einen großen Winkelbereich hinweg realisiert werden. Bei einem LIDAR-System beispielsweise mit einer Austrittsapertur von 25 mm sind so über einen Winkelbereich von +/-10° Strehl-Verhältnisse größer 0,9 möglich.

Besonders vorteilhaft ist das erfindungsgemäße System für LIDAR-Messungen für frequenzmodulierte Dauerstrich-LIDAR-Messungen geeignet.

Nach einem weiteren Aspekt der Erfindung wird ein System für kombinierte Laser-Doppler-Anemometrie und LIDAR-Messungen vorgeschlagen, wenigstens umfassend eine optische Vorrichtung zur Nah- und Fernabbildung wie vorstehend beschrieben.

Insbesondere umfasst das System für kombinierte Laser-Doppler-Anemometrie und LIDAR-Messungen eine optische Vorrichtung zur Nah- und Fernabbildung, umfassend eine optische Einheit mit wenigstens einer ersten optischen Linse und wenigstens einer zweiten optischen Linse, wobei die wenigstens eine erste optische Linse und wenigstens eine zweite optische Linse entlang einer optischen Achse angeordnet sind.

Weiter umfasst die optische Vorrichtung eine Sende- und Empfangseinheit mit wenigstens einem, insbesondere im Wesentlichen punktförmigen, Sende- und Empfangselement zum Aussenden und Empfangen von Lichtstrahlen durch die optische Einheit, wobei Lichtdurchtrittsflächen der Sende- und Empfangselemente auf wenigstens einer ebenen oder gewölbten Fläche angeordnet sind, oder diese schneiden. Entlang der optischen Achse ist ein erster Abstand zwischen der wenigstens einen Fläche und der wenigstens einen ersten optischen Linse so eingestellt vorgesehen, dass im bestimmungsgemäßen Normalbetrieb die Sende- und Empfangselemente der Sende- und Empfangseinheit von der optischen Einheit auf eine entfernte Abbildungsfläche abgebildet sind.

Alternativ oder zusätzlich ist entlang der optischen Achse ein zum ersten Abstand verschiedener zweiter Abstand zwischen der wenigstens einen Fläche der Sende- und Empfangselemente und der wenigstens einen ersten optischen Linse so eingestellt vorgesehen, dass im bestimmungsgemäßen Normalbetrieb der von den Sende- und Empfangselementen ausgesendete Lichtstrahl zumindest nach der zweiten Linse kollimiert ausgebildet ist.

Das erfindungsgemäße System besteht vorteilhaft aus möglichst wenigen Komponenten, nämlich aus einer optischen Vorrichtung mit wenigstens zwei asphärischen optischen Linsen, die eine Wiederfokussierung von Licht in einem kegelförmigen Abbildungsbereich bei essentiell beugungsbegrenzter Abbildungsqualität ermöglichen. So können mehrere LDA-Optikeinheiten in einer optischen Vorrichtung zusammengefasst werden, wodurch sich die LDA-Kanalzahl kostengünstig erhöhen lässt.

Die Linsenkombination der erfindungsgemäßen optischen Einheit ermöglicht es beispielsweise, eine zentral platzierte Lichtleitfaser etwas dichter an der ersten optischen Linse zu positionieren und dabei wieder einen nahezu beugungsbegrenzten kollimierten Lichtstrahl zu generieren.

Dies bedeutet, dass vorteilhaft mit derselben optischen Einheit ein LIDAR-Kanal zentral kollimiert und mehrere LDA-Kanäle gegeneinander geneigt refokussierend abgebildet werden können.

Ein solches kombiniertes System für LDA als auch LIDAR weist den Vorteil auf, dass zwischen den beiden Verfahren die optische Vorrichtung nicht umgeschaltet werden muss. Damit sind vorteilhaft simultane Messungen mit LDA als auch LIDAR möglich.

Besonders vorteilhaft ist das erfindungsgemäße System für kombinierte LDA und LIDAR-Messungen für frequenzmodulierte Dauerstrich-LIDAR-Messungen geeignet.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine optische Vorrichtung zur Nah- und Fernabbildung nach einem Ausführungsbeispiel der Erfindung in einem Längsschnitt;
- Fig. 2: die optische Vorrichtung nach Figur 1 in einer isometrischen Darstellung;
- Fig. 3: die optische Vorrichtung nach Figur 1 in einer isometrischen Darstellung mit einem Abbildungsbereich;
- Fig. 4: die Sende- und Empfangseinheit der optischen Vorrichtung nach Figur 1 in einem Längsschnitt;
- Fig. 5: eine Sende- und Empfangseinheit der optischen Vorrichtung nach einem weiteren Ausführungsbeispiel in einem Längsschnitt;
- Fig. 6: eine Sende- und Empfangseinheit der optischen Vorrichtung nach einem weiteren Ausführungsbeispiel in einem Längsschnitt;
- Fig. 7: eine schematische Darstellung eines Systems für Laser-Doppler-Anemometrie nach einem Ausführungsbeispiel der Erfindung; und
- Fig. 8: eine schematische Darstellung eines Systems für frequenzmoduliertes Dauerstrich-LIDAR nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

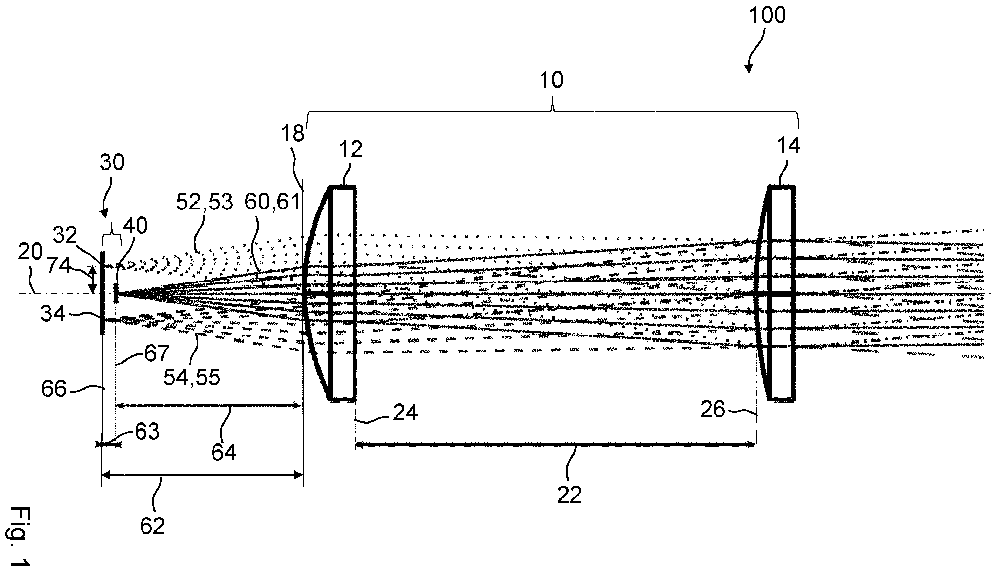

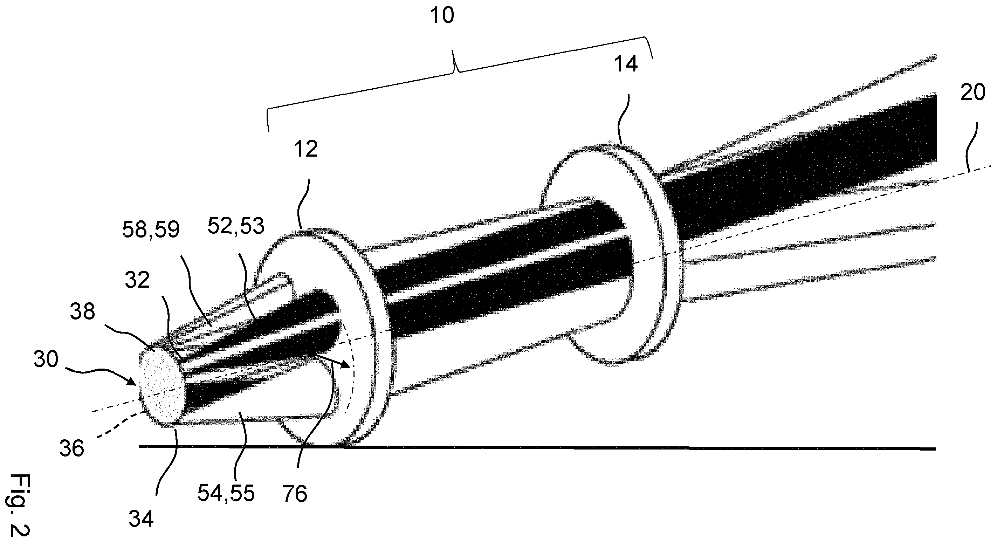

Figur 1 zeigt eine optische Vorrichtung 100 zur Nah- und Fernabbildung nach einem Ausführungsbeispiel der Erfindung in einem Längsschnitt, während in Figur 2 die optische Vorrichtung 100 in einer isometrischen Darstellung gezeigt ist.

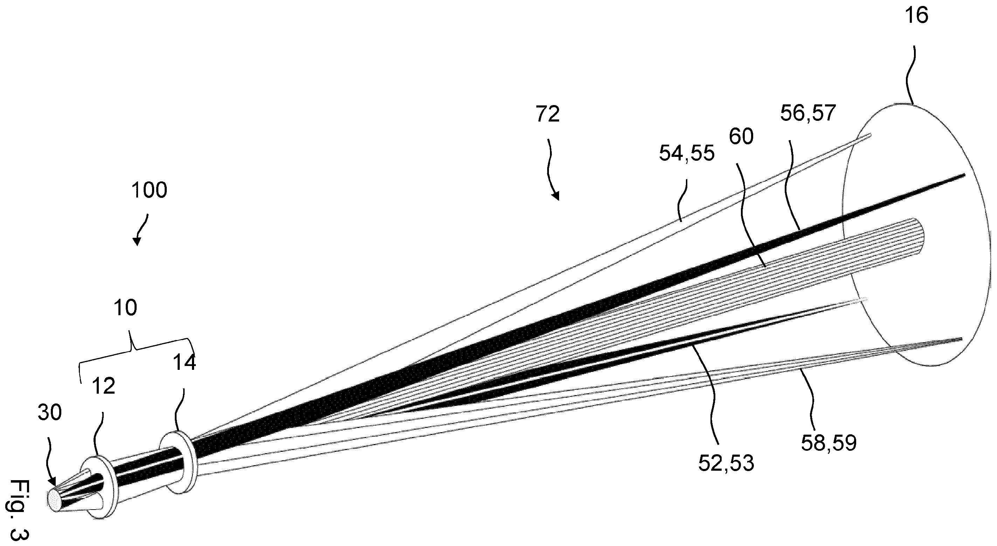

Figur 3 zeigt die optische Vorrichtung 100 nach Figur 1 in einer isometrischen Darstellung mit einem Abbildungsbereich 72.

Die optische Vorrichtung 100 zur Nah- und Fernabbildung umfasst eine optische Einheit 10 mit einer ersten optischen Linse 12 und einer zweiten optischen Linse 14, wobei die eine erste optische Linse 12 und eine zweite optische Linse 14 entlang einer optischen Achse 20 angeordnet sind. Die beiden Linsen 12, 14 sind als asphärische Linsen ausgebildet.

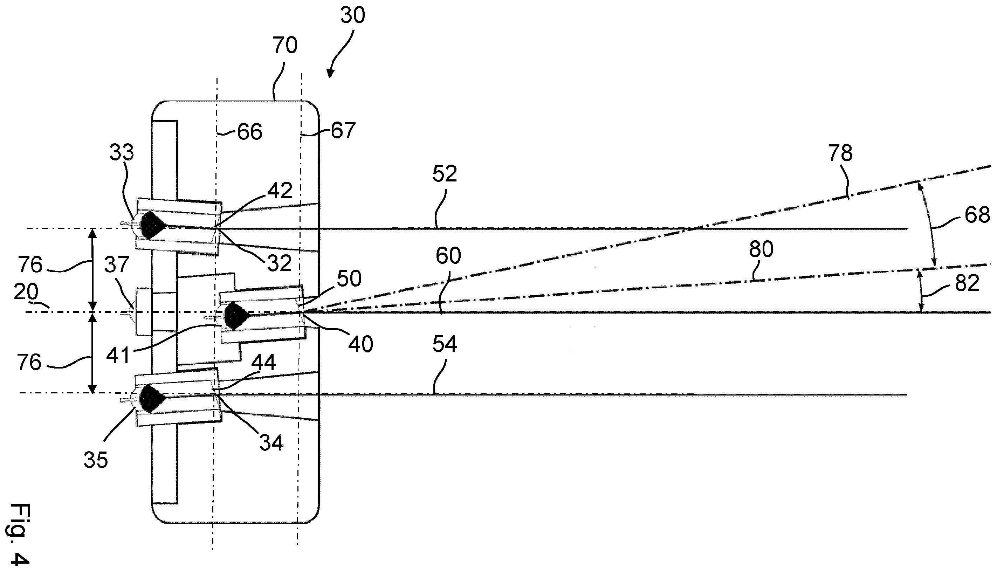

Weiter umfasst die optische Vorrichtung 100 eine Sende- und Empfangseinheit 30 mit vier im Wesentlichen punktförmigen Sende- und Empfangselementen 32, 34, 36, 38 zum Aussenden und Empfangen von Lichtstrahlen 52, 54, 56, 58 durch die optische Einheit 30. Die Lichtdurchtrittsflächen 42, 44, 46, 48, 50 der Sende- und Empfangselemente 32, 34, 36, 38, 40, welche in den Figuren 4 bis 6 zu erkennen sind, sind jeweils auf einer ebenen oder gewölbten Fläche 66, 67 angeordnet, oder schneiden diese, welche beispielsweise schräg zu der optischen Achse 20 schneiden kann.

Bei dem in den Figuren 1 bis 4 dargestellten Ausführungsbeispiel sind die Sende- und Empfangselemente 32, 34, 36, 38, 40 auf den Flächen 66, 67 senkrecht zu der optischen Achse 20 angeordnet.

Entlang der optischen Achse 20 ist ein erster Abstand 62 zwischen der einen Fläche 66 und der ersten optischen Linse 12 so eingestellt vorgesehen, dass im bestimmungsgemäßen Normalbetrieb die Sende- und Empfangselemente 32, 34, 36, 38 der Sende- und Empfangseinheit 30 von der optischen Einheit 10 auf eine entfernte Abbildungsfläche 16 abgebildet sind, welche in Figur 3 erkennbar ist. Die Fläche 66 ist den Sende- und Empfangselementen 32, 34, 36, 38 zugeordnet.

Entlang der optischen Achse 20 ist weiter ein zum ersten Abstand 62 verschiedener zweiter Abstand 64 zwischen der einen Fläche 67, die dem einen Sende- und Empfangselement 40 zugeordnet ist, und der ersten optischen Linse 12 so eingestellt vorgesehen, dass im bestimmungsgemäßen Normalbetrieb der von dem einen Sende- und Empfangselement 40 ausgesendete Lichtstrahl 60 zumindest nach der zweiten Linse 14 kollimiert ausgebildet ist.

Der Abstand 62 ist dabei definiert zwischen der Fläche 66 und einer tangentialen Ebene 18 am Scheitel der ersten optischen Linse 12, während der Abstand 64 zwischen der Fläche 67 und der tangentialen Ebene 18 am Scheitel der ersten optischen Linse 12 definiert ist.

Bei dem in Figur 1 dargestellten Ausführungsbeispiel sind so mehrere Sende- und Empfangselemente 32, 34, 36, 38, 40 vorgesehen, die auf den wenigstens zwei, entlang der optischen Achse 20 verschiedenen Flächen 66, 67 angeordnet sind, wobei der zweite Abstand 64 geringer ist als der erste Abstand 62. Günstigerweise ist das Sende- und Empfangselement 40 auf der optischen Achse 20 angeordnet, während die Sende- und Empfangselemente 32, 34, 36, 38 im Kreis um die optische Achse angeordnet sind.

Die Sende- und Empfangselemente 32, 34, 36, 38 können beispielsweise auf einer gewölbten oder ebenen Fläche 66 schräg, insbesondere senkrecht, wie bei dem hier gezeigten Ausführungsbeispiel, zu der optischen Achse 20 angeordnet sein. Von einer gewölbten Fläche 66 aus kann eine nahezu beugungsbegrenzte Wiederabbildung der Sende- und Empfangselemente 32, 34, 36, 38 erfolgen. Liegen die Sende- und Empfangselemente 32, 34, 36, 38 auf einer gewölbten Fläche 66, so liegen die Abbildungen der Sende- und Empfangselemente 32, 34, 36, 38 ebenfalls auf einer gewölbten Abbildungsfläche 16. Liegen die Sende- und Empfangselemente auf einer ebenen Fläche 66, so können die Abbildungen der Sende- und Empfangselemente 32, 34, 36, 38 je nach Güte der optischen Einheit auf einer ebenen oder auch gewölbten Abbildungsfläche 16 liegen.

Die wenigstens eine Fläche 66, 67 kann gewölbt ausgebildet und von der optischen Einheit 10 weg gekrümmt sein. Alternativ kann die wenigstens eine Fläche 66, 67 eben ausgebildet sein. Insbesondere kann dabei die ebene Fläche 66, 67 senkrecht zu der optischen Achse 20 angeordnet sein wie in Figur 1.

Schnittpunkte der Lichtdurchtrittsflächen 42, 44, 46, 48, 50 der Sende- und Empfangselemente 32, 34, 36, 38, 40 mit der wenigstens einen gewölbten Fläche 66, 67 können in einer Ebene angeordnet sein. Insbesondere kann dabei die Ebene mit den Schnittpunkten die gewölbte Fläche 66, 67 an einem auf der optischen Achse 20 liegenden Scheitelpunkt berühren.

Die optische Einheit 10 ist dazu vorteilhaft als ringförmig wiederabbildende Optik ausgebildet.

Die optische Einheit 10 ist zur beugungsbegrenzten Abbildung der Sende- und Empfangselemente 32, 34, 36, 38, 40 ausgebildet.

Die optische Einheit 10 ist weiter als zentral kollimierende Optik ausgebildet. Der kollimierte Lichtstrahl 60 ist insbesondere in Figur 3 nach Durchlaufen der optischen Einheit 10 erkennbar.

Die Sende- und Empfangselemente 32, 34, 36, 38 sind auf der Fläche 66 in einem radialen Abstand 74 zu der optischen Achse 20 angeordnet, welcher in diesem Beispiel ungefähr einem halben Radius einer Apertur der ausgesendeten Lichtstrahlen 52, 54, 56, 58, 60 an der zweiten optischen Linse 14 entspricht. Insbesondere können dabei wenigstens einige der Sende- und Empfangselemente 32, 34, 36, 38 auf der Fläche 66 kreisförmig mit einem Radius 76 (in Figur 2 erkennbar) zu der optischen Achse 20 angeordnet sein, welcher ungefähr einem halben Radius einer Apertur der ausgesendeten Lichtstrahlen 52, 54, 56, 58, 60 an der zweiten optischen Linse 14 entspricht.

Die von den Sende- und Empfangselementen 32, 34, 36, 38 ausgesendeten Lichtstrahlen 52, 54, 56, 58 bilden Lichtkegel 53, 55, 57, 59, welche sich in einem Abbildungsbereich 72 auf einer von der Sende- und Empfangseinheit 30 abgewandten Seite der optischen Einheit 10 im Durchmesser verjüngen. Die Abbildung der Sende- und Empfangselemente 32, 34, 36, 38 mittels der optischen Einheit 10 im Abbildungsbereich 72 auf die entfernte Abbildungsfläche 16 ist in Figur 3 dargestellt.

Der jeweils ausgesendete Lichtkegel 53, 55, 57, 59 eines der Sende- und Empfangselemente 32, 34, 36, 38 beleuchtet die erste optische Linse 12 auf einer Hälfte ihres Querschnitts, insbesondere zwischen Rand und optischer Achse 20.

Dies ist im Längsschnitt in Figur 1 durch die mit gepunkteten Linien und gestrichelten Linien dargestellten Lichtkegel 53, 55 zu erkennen.

Dabei ist die zweite optische Linse 14 zu der ersten optischen Linse 12 in einem Abstand 22 angeordnet, der so eingestellt vorgesehen ist, dass die Lichtkegel 53, 55, 57, 59, 61 der Sende- und Empfangselemente 32, 34, 36, 38, 40 ausgehend von der ersten optischen Linse 12 die zweite optische Linse 14 sich überdeckend zentral durchqueren, insbesondere mit einem hohen Füllfaktor von 50%, bevorzugt von mindestens 70%, besonders bevorzugt von mindestens 90%, durchqueren. Der Abstand 22 ist definiert zwischen der rückseitigen Fläche 24 der ersten optischen Linse 12 und einer tangentialen Ebene 26 am Scheitel der zweiten optischen Linse 14.

Die erste optische Linse 12 kann vorteilhaft asphärische Parameter aufweisen, mit denen asymmetrische Abbildungsfehler der wenigstens einen zweiten optischen Linse 14 bei einer Abbildung der Sende- und Empfangselemente 32, 34, 36, 38 kompensiert werden.

Die zweite optische Linse 14 kann wiederum asphärische Parameter aufweisen, mit denen bei der Abbildung der Sende- und Empfangselemente 32, 34, 36, 38 durch die erste optische Linse 12 entstehende rotationssymmetrische Abbildungsfehler bei einer Abbildung der Sende- und Empfangselemente 32, 34, 36, 38 durch die zweite optische Linse 14 kompensiert werden.

Außer den Sende- und Empfangselementen 32, 34, 36, 38, welche auf der Fläche 66 angeordnet sind, ist in der Sende- und Empfangseinheit 30 ein weiteres Sende- und Empfangselement 40 vorgesehen, dessen Lichtdurchtrittsfläche 50 die optische Achse 20 schneidet und im zweiten Abstand 64 zu der ersten optischen Linse 12 angeordnet ist.

Dabei ist der Lichtstrahl 60 des wenigstens einen Sende- und Empfangselements 40 nach Durchlaufen der optischen Einheit 10 kollimiert in Richtung der optischen Achse 20 ausgebildet.

Das weitere Sende- und Empfangselement 40 ist in einem Abstand 64 zu der ersten optischen Linse 12 angeordnet, der um eine Differenz 63 geringer ist als der Abstand 62 der anderen Sende- und Empfangselemente 32, 34, 36, 38 zu der ersten optischen Linse 12.

Das weitere Sende- und Empfangselement 40 ist auf der optischen Achse 20 angeordnet und sendet einen Lichtstrahl 60 mit einem Lichtkegel 61 in Richtung der optischen Achse 20 aus.

Das weitere Sende- und Empfangselement 40 kann vorteilhaft zur Durchführung eines frequenzmodulierten Dauerstrich-LIDAR-Verfahrens ausgebildet sein.

In Figur 4 ist die Sende- und Empfangseinheit 30 der optischen Vorrichtung 100 nach Figur 1 in einem Längsschnitt dargestellt.

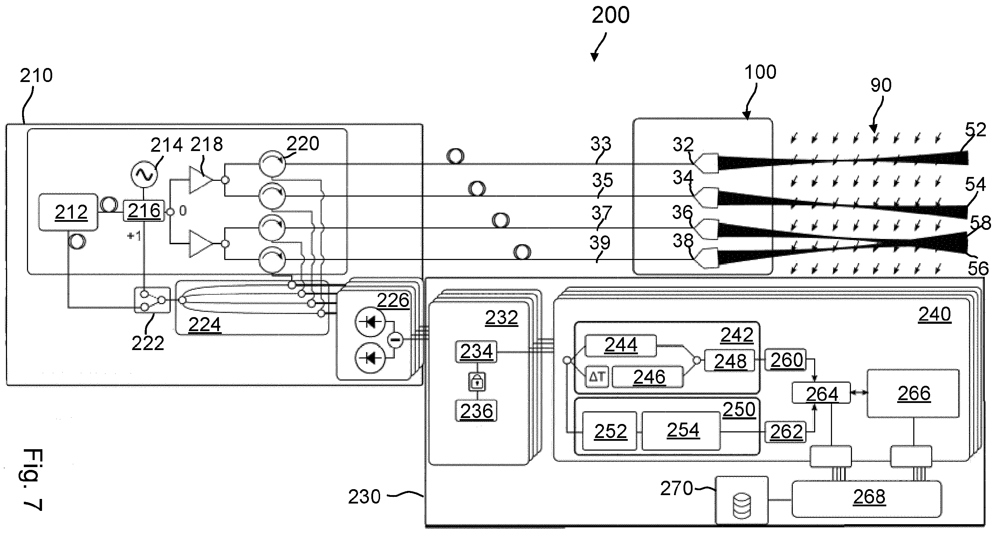

In der Sende- und Empfangseinheit 30 sind fünf Sende- und Empfangselemente 32, 34, 36, 38, 40 angeordnet, von denen jedoch in Figur 4 nur vier der fünf Lichtleitfasern 33, 35, 37, 39, 41 erkennbar sind, welche in einer Faserhalterung 70 angeordnet sind. Die Lichtleitfasern 33, 35, 37, 39, 41 weisen abgeschrägte Enden auf, welche Lichtdurchtrittsflächen 42, 44, 46, 48, 50 der Sende- und Empfangselemente 32, 34, 36, 38, 40 darstellen. Die Lichtdurchtrittsflächen der Lichtleitfasern 37, 39 sind in der Figur aufgrund der Schnittdarstellung abgeschnitten (Lichtleitfaser 37 ist in Figur 7 angedeutet). Die Sende- und Empfangselemente 32, 34, 36, 38, 40 bei dem dargestellten Ausführungsbeispiel senden Lichtkegel 53, 55, 57, 59, 61 parallel zur optischen Achse 20 aus.

Die Sende- und Empfangselemente 32, 34, 36, 38 der Sende- und Empfangseinheit 30 liegen auf einer Fläche 66, während das Sende- und Empfangselement 40 auf der zweiten Fläche 67 angeordnet ist.

Die abgeschrägten Enden der Lichtleitfasern 33, 35, 37, 39, 41 sind so ausgebildet, dass eine Normale 78 auf die Lichtdurchtrittsfläche 42, 44, 46, 48, 50 einer Lichtleitfaser 33, 35, 37, 39, 41 jeweils einen Winkel 68 von weniger als 10°, insbesondere von höchstens 8°, gegen eine Längsachse 80 der jeweiligen Lichtleitfaser 33, 35, 37, 39, 41 aufweist.

Der Winkel 68 ist an der einen Lichtleitfaser 41 exemplarisch dargestellt. Die Längsachsen 78 der Lichtleitfasern 33, 35, 37, 39, 41 sind um einen Winkel 82 gegen die optische Achse 20 verkippt. Der Winkel 82 beträgt weniger als 10° und insbesondere höchstens 4°.

Die auf der Fläche 66 angeordneten Sende- und Empfangselemente 32, 34, 36, 38 sind mit einem radialen Abstand 76 auf einem Kreis um die optische Achse 20 angeordnet.

Optional kann die Sende- und Empfangseinheit 30 anstatt als eine Faserhalterung 70 mit einzelnen Lichtleitfasern 33, 35, 37, 39, 41 als Array von Lichtleitfasern 33, 35, 37, 39, 41 ausgebildet sein.

Bei dem in den Figuren 1 bis 4 dargestellten Ausführungsbeispiel einer erfindungsgemäßen optischen Vorrichtung 100 sind Schnittpunkte der Lichtdurchtrittsflächen 42, 44, 46, 48, 50 der Sende- und Empfangselemente 32, 34, 36, 38, 40 mit der wenigstens einen gewölbten Fläche 66, 67 in einer Ebene angeordnet. Insbesondere berührt dabei die Ebene mit den Schnittpunkten die gewölbte Fläche 67 an einem auf der optischen Achse 20 liegenden Scheitelpunkt.

Auf diese Weise sind so in dem hier dargestellten Ausführungsbeispiel die Sende- und Empfangselemente 32, 34, 36, 38 für LDA auf einem Kreis angeordnet und das Sende- und Empfangselement 40 für FMCW LIDAR zentral auf einem Punkt auf der optischen Achse 20.

Vorteilhaft können beide Abbildungsbedingungen in einem gegebenen Sichtfeld nahezu beliebig kombiniert werden, um ein monolithisches System für LDA und FMCW LIDAR zu schaffen.

Die in den Figuren 1 bis 4 dargestellten Ausführungsform einer erfindungsgemäßen optischen Vorrichtung 100 stellt damit einen Spezialfall einer allgemeinen optischen Vorrichtung 100 dar, bei dem die Sende- und Empfangselemente 32, 34, 36, 38, 40 auf zwei gewölbten Flächen angeordnet sind.

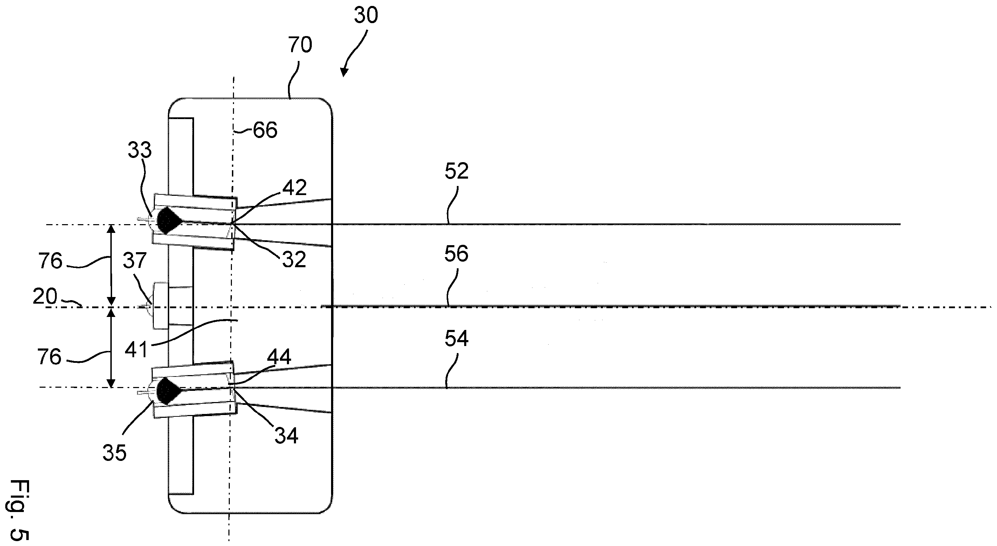

Figur 5 zeigt eine Sende- und Empfangseinheit 30 der optischen Vorrichtung 100 nach einem weiteren Ausführungsbeispiel in einem Längsschnitt.

Die optische Vorrichtung 100 kann insbesondere für ein System 200 für Laser-Doppler-Anemometrie vorgesehen sein. Dabei sind Sende- und Empfangselemente 32, 34, 36, 38 auf einer Fläche 66 angeordnet.

Entlang der optischen Achse 20 kann dabei vorteilhaft ein erster Abstand 62 zwischen der Fläche 66 und der ersten optischen Linse 12, wie in Figur 1 definiert, so eingestellt sein, dass im bestimmungsgemäßen Normalbetrieb die Sende- und Empfangselemente 32, 34, 36, 38 der Sende- und Empfangseinheit 30 von der optischen Einheit 10 auf die entfernte Abbildungsfläche 16 abgebildet werden.

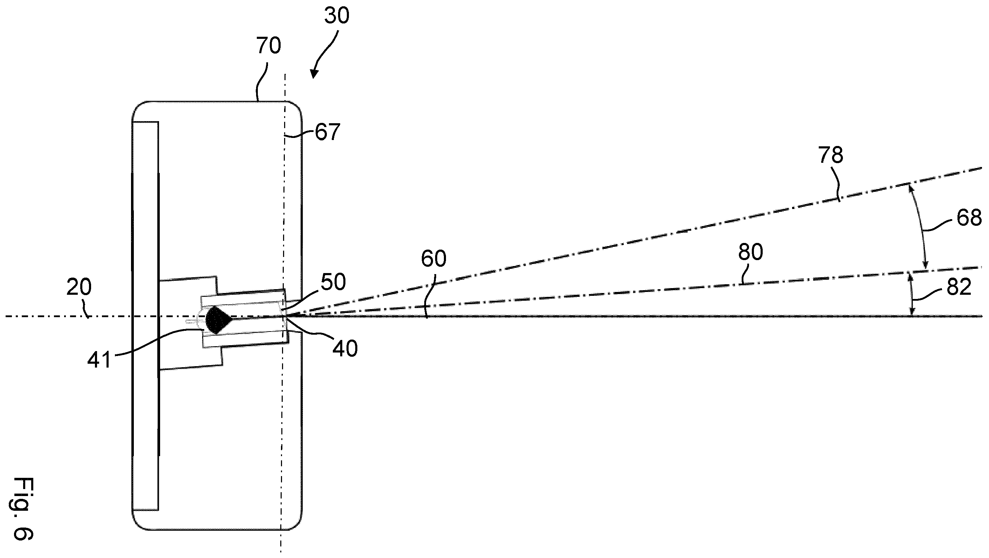

In Figur 6 ist eine Sende- und Empfangseinheit 30 der optischen Vorrichtung 100 nach einem weiteren Ausführungsbeispiel in einem Längsschnitt dargestellt.

Die optische Vorrichtung 100 kann insbesondere für ein System 300 für frequenzmoduliertes Dauerstrich-LIDAR vorgesehen sein. Dabei ist ein Sende- und Empfangselement 40 auf einer Fläche 67 angeordnet.

Entlang der optischen Achse 20 kann dabei ein zweiter Abstand 64 zwischen der Fläche 67 des Sende- und Empfangselements 40 und der ersten optischen Linse 12 so eingestellt sein, dass im bestimmungsgemäßen Normalbetrieb der von dem Sende- und Empfangselement 40 ausgesendete Lichtstrahl 60 zumindest nach der zweiten Linse 14 kollimiert ausgebildet ist.

Figur 7 zeigt eine schematische Darstellung eines Systems 200 für Laser-Doppler-Anemometrie nach einem Ausführungsbeispiel der Erfindung. Das System 200 umfasst eine erfindungsgemäße optische Vorrichtung 100 wie vorstehend beschrieben.

Zur Erzeugung von Lichtstrahlen weist das System 200 ein Lasersystem 210 auf, welches einen Laser 212 umfasst, beispielsweise einen Erbiumdotierten Halbleiterlaser. Ein Oszillator 214 erzeugt ein Signal, welches in einem Modulator 216 dem Laserstrahl aufmoduliert wird, welcher anschließend über optische Verstärker 218 in vier Zirkulatoren 220 eingespeist wird.

Die Lichtstrahlen des Lasers 212 werden über Lichtleitfasern 33, 35, 37, 39 in die optische Vorrichtung 100 geleitet.

Mittels der Lichtleitfasern 33, 35, 37, 39 sind Sende- und Empfangselemente 32, 34, 36, 38 gebildet, welche Lichtstrahlen 52, 54, 56, 58 in ein Strömungsfeld 90 senden.

Gestreute Lichtstrahlen werden von der optischen Vorrichtung 100 über die Sende- und Empfangselemente 32, 34, 36, 38 empfangen und über die Lichtleitfasern 33, 35, 37, 39 den Zirkulatoren 220 wieder zugeleitet. Über die Zirkulatoren 220 werden die ausgekoppelten gestreuten Lichtstrahlen in ein Interferometer 224 gespeist, und mit Referenzlichtstrahlen, welche über einen optischen Schalter 222 von dem Laser 212 sowie von dem Modulator 216 eingespeist werden, zur Interferenz gebracht. Diese interferierten Lichtstrahlen werden in einem Detektor 226 mittels Photodioden detektiert.

Die detektierten Signale werden in einer Analyse-Einheit 230 weiterverarbeitet.

Die Signale des Detektors 226 werden zunächst in einer Analog-Digital-Converter (ADC)-Einheit 232 mittels eines ADCs 234, der über eine Phasenregelschleife 236 gesteuert wird, digital gewandelt und beispielsweise in einem Datenverarbeitungssystem 240 weiterverarbeitet.

Dieses Datenverarbeitungssystem 240 weist eine Ereignisdetektionseinheit 242 mit einer Schnelle-Fourier-Transformation (FFT)-Einheit 244, 246 und einer Triggereinheit 248 auf. Weiter umfasst die Datenverarbeitungseinheit 240 eine Mittelwertbildungseinheit 250 mit einer weiteren FFT-Einheit 252, sowie einem Blockspeicher 254.

Signale der Ereignisdetektionseinheit 242 sowie der Mittelwertbildungseinheit 250 werden über Speicherdirektzugriffseinheiten 260, 262 in einen schnellen Halbleiterspeicher 264 gespeichert.

Aus dem Halbleiterspeicher 264 werden die Daten über einen Linux-Prozessor 266 in einem zentralen Mess- und Kontrollsystem 268 mit angeschlossenem Speicher 270 weiterverarbeitet.

Werden die Sende- und Empfangselemente 32, 34, 36, 38 auf einer gewölbten Fläche angeordnet, kann eine nahezu beugungsbegrenzte Wiederabbildung der Faserenden erfolgen. So lässt sich ein LDA-System über einen großen Winkelbereich realisieren. Bei einem LDA-System beispielsweise mit einer Austrittsapertur von 25 mm sind so über einen Winkelbereich von +/-10° Strehl-Verhältnisse größer 0,8 möglich.

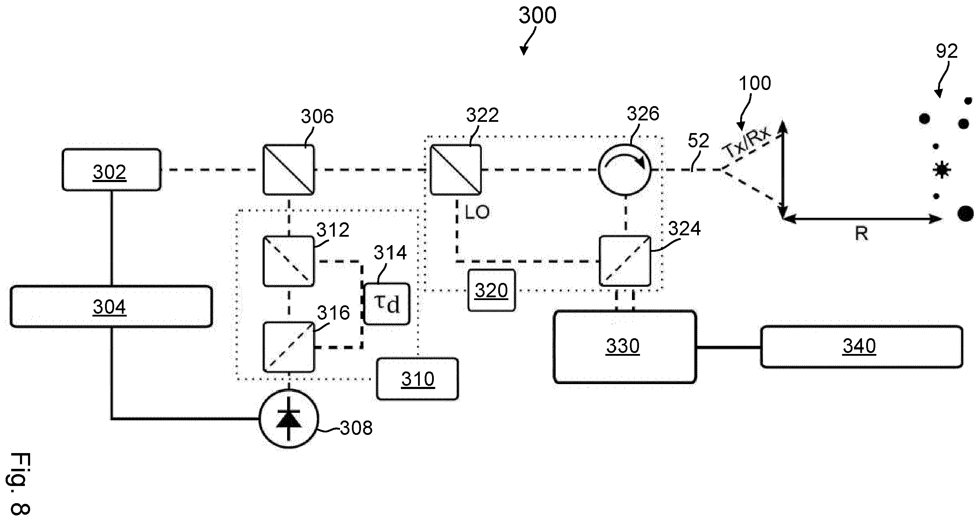

Figur 8 zeigt eine schematische Darstellung eines Systems 300 für frequenzmoduliertes Dauerstrich-LIDAR nach einem Ausführungsbeispiel der Erfindung. Das System 300 umfasst eine erfindungsgemäße optische Vorrichtung 100 wie vorstehend beschrieben. Gestrichelte Verbindungslinien stellen optische Signale dar, durchgezogene Verbindungslinien stellen elektrische Signale dar.

Das System 300 umfasst einen Laser 302, der einen Laserstrahl erzeugt, dessen Hauptstrahl über einen optischen Strahlteiler 306, der beispielsweise als 99/1-Strahlteiler ausgebildet sein kann, in ein sogenanntes Ranging-Interferometer 320 geleitet wird.

Ein Referenzstrahl wird in ein weiteres Interferometer 310 geleitet, das beispielsweise als sogenanntes Mach-Zehnder-Interferometer ausgebildet sein kann und welches zwei weiter Strahlteiler 312, 316, die beispielsweise als 50/50-Strahlteiler ausgebildet sein können, sowie ein Verzögerungsglied 314 umfasst.

Ein elektrisches Signal des Lasers 302 erzeugt über eine Linearisierungseinheit 304 und eine Photodiode 308 ein weiteres Lichtsignal, welches ebenfalls in das Interferometer 310 geleitet wird.

Der Laserstrahl für die Messaufgabe wird in dem Ranging-Interferometer über den 99/1-Strahlteiler 322 zu dem Zirkulator 326 geleitet, von wo der Laserstrahl 52 über die optische Vorrichtung 100 ausgesendet wird. Ein Referenzstrahl aus dem Strahlteiler 322 wird in einen weiteren Strahlteiler 324 geleitet.

Der ausgesendete Lichtstrahl kann dabei von einer Aerosolwolke 92, und/oder dahinter liegenden festen Objekten gestreut werden.

In der optischen Vorrichtung 100 empfangene gestreute Lichtstrahlen werden über den Zirkulator 326 ebenfalls in den Strahlteiler 324 geleitet und dort mit dem Referenzstrahl zur Interferenz gebracht. Anschließend werden die Signale in einem Detektor 330 detektiert.

Detektierte Signale werden in einer Datenanalyseeinheit 340 weiterverarbeitet.

In einem alternativen, hier nicht dargestellten Ausführungsbeispiel ist es möglich, die Lichtleitfasern auf einer gewölbten Fläche anzuordnen. Dies gestattet eine nahezu beugungsbegrenzte Abbildung der kollimierten Lichtstrahlen ins Unendliche. So kann beispielsweise ein FMCW LIDAR-System über einen großen Winkelbereich hinweg realisiert werden. Bei einem FMCW LIDAR-System beispielsweise mit einer Austrittsapertur von 25 mm sind so über einen Winkelbereich von +/-10° Strehl-Verhältnisse größer 0,9 möglich.

### Bezugszeichen

- 10: optische Einheit
- 12: erste optische Linse
- 14: zweite optische Linse
- 16: Abbildungsfläche
- 18: tangentiale Ebene
- 20: optische Achse
- 22: Abstand
- 24: rückseitige Fläche
- 26: tangentiale Ebene
- 30: Sende- und Empfangseinheit
- 32: Sende- und Empfangselement
- 33: Lichtleitfaser
- 34: Sende- und Empfangselement
- 35: Lichtleitfaser
- 36: Sende- und Empfangselement
- 37: Lichtleitfaser
- 38: Sende- und Empfangselement
- 39: Lichtleitfaser
- 40: Sende- und Empfangselement
- 41: Lichtleitfaser
- 42: Lichtdurchtrittsfläche
- 44: Lichtdurchtrittsfläche
- 46: Lichtdurchtrittsfläche
- 48: Lichtdurchtrittsfläche
- 50: Lichtdurchtrittsfläche
- 52: Lichtstrahl
- 53: Lichtkegel
- 54: Lichtstrahl
- 55: Lichtkegel
- 56: Lichtstrahl
- 57: Lichtkegel
- 58: Lichtstrahl
- 59: Lichtkegel
- 60: Lichtstrahl
- 61: Lichtkegel
- 62: erster Abstand
- 63: Abstandsdifferenz
- 64: zweiter Abstand
- 66: Fläche
- 67: Fläche
- 68: Winkel
- 70: Faserhalterung
- 72: Abbildungsbereich
- 74: Abstand
- 76: Radius
- 78: Normale der Lichtdurchtrittsfläche
- 80: Längsachse
- 82: Winkel
- 90: Strömungsfeld
- 92: Aerosolwolke
- 100: Optische Vorrichtung
- 200: System für LDA
- 210: Lasersystem
- 212: Laser
- 214: Oszillator
- 216: Modulator
- 218: optischer Verstärker
- 220: Zirkulator
- 222: Schalter
- 224: Interferometer
- 226: Photodioden
- 230: Analyse-Einheit
- 232: ADC-Einheit
- 234: ADC
- 236: Phasenregelschleife
- 240: Datenverarbeitungssystem
- 242: Ereignisdetektionseinheit
- 244: FFT-Einheit
- 246: FFT-Einheit
- 248: Triggereinheit
- 250: Mittelwertbildungseinheit
- 252: FFT-Einheit
- 254: Blockspeicher
- 260: Speicherdirektzugriffseinheit
- 262: Speicherdirektzugriffseinheit
- 264: Halbleiterspeicher
- 266: Linux Prozessor
- 268: zentrales Mess- und Kontrollsystem
- 270: Speicher
- 300: System für LIDAR
- 302: Laser
- 304: Linearisierungseinheit
- 306: Strahlteiler
- 308: Photodiode
- 310: Interferometer
- 312: Strahlteiler
- 314: Verzögerungsglied
- 316: Strahlteiler
- 320: Interferometer
- 322: Strahlteiler
- 324: Strahlteiler
- 326: Zirkulator
- 330: Detektor
- 340: Datenanalyseeinheit
- 400: System für LDA/ LIDAR

## Patentansprüche

1. Optische Vorrichtung (100) zur Nah- und Fernabbildung, umfassend
eine optische Einheit (10) mit wenigstens einer ersten optischen Linse (12) und wenigstens einer zweiten optischen Linse (14), wobei die wenigstens eine erste optische Linse (12) und wenigstens eine zweite optische Linse (14) entlang einer optischen Achse (20) angeordnet sind,
eine Sende- und Empfangseinheit (30) mit wenigstens einem, insbesondere im Wesentlichen punktförmigen, Sende- und Empfangselement (32, 34, 36, 38, 40) zum Aussenden und Empfangen von Lichtstrahlen (52, 54, 56, 58, 60) durch die optische Einheit (10), wobei eine Lichtdurchtrittsfläche (42, 44, 46, 48, 50) des wenigstens einen Sende- und Empfangselements (32, 34, 36, 38, 40) in wenigstens einer ebenen oder gewölbten Fläche (66, 67) angeordnet ist oder diese schneidet,
wobei die optische Einheit (10) als ringförmig wiederabbildende Optik ausgebildet ist,
wobei entlang der optischen Achse (20) ein erster Abstand (62) zwischen einer ersten Fläche (66) der wenigstens einen Fläche (66, 67) und der wenigstens einen ersten optischen Linse (12) so eingestellt vorgesehen ist, dass im bestimmungsgemäßen Normalbetrieb mehr als ein Sende- und Empfangselement (32, 34, 36, 38) der Sende- und Empfangseinheit (30) von der optischen Einheit (10) auf eine entfernte Abbildungsfläche (16) abgebildet ist, wobei die Sende- und Empfangselemente (32, 34, 36, 38) auf der ersten Fläche (66) in einem radialen Abstand (74) zu der optischen Achse (20) angeordnet sind, welcher wenigstens 30% eines Radius einer Apertur der ausgesendeten Lichtstrahlen (52, 54, 56, 58) an der zweiten optischen Linse (14) entspricht.

2. Optische Vorrichtung nach Anspruch 1, wobei entlang der optischen Achse (20) ein zum ersten Abstand (62) verschiedener zweiter Abstand (64) zwischen einer zweiten Fläche (67) der wenigstens einen Fläche (67) der Sende- und Empfangselemente (40) und der wenigstens einen ersten optischen Linse (12) so eingestellt vorgesehen ist, dass im bestimmungsgemäßen Normalbetrieb der von den Sende- und Empfangselementen (40) ausgesendete Lichtstrahl (60) zumindest nach der zweiten Linse (14) kollimiert ausgebildet ist.

3. Optische Vorrichtung nach Anspruch 2, wobei mehrere Sende- und Empfangselemente (32, 34, 36, 38, 40) vorgesehen sind, die auf den wenigstens zwei, entlang der optischen Achse (20) verschiedenen Flächen (66, 67) angeordnet sind, wobei der zweite Abstand (64) geringer ist als der erste Abstand (62).

4. Optische Vorrichtung nach einem der vorhergehenden Ansprüche, wobei die wenigstens eine Fläche (66, 67), in welcher die Lichtdurchtrittsflächen (42, 44, 46, 48, 50) der Sende- und Empfangselemente (32, 34, 36, 38, 40) angeordnet sind, gewölbt ausgebildet und von der optischen Einheit (10) weg gekrümmt ist, oder wobei die wenigstens eine Fläche (66, 67) eben ausgebildet ist, insbesondere wobei die wenigstens eine ebene Fläche (66, 67) senkrecht zu der optischen Achse (20) angeordnet ist.

5. Optische Vorrichtung nach Anspruch 4, wobei Schnittpunkte der Lichtdurchtrittsflächen (42, 44, 46, 48, 50) der Sende- und Empfangselemente (32, 34, 36, 38, 40) mit der wenigstens einen gewölbten Fläche (66, 67) in einer Ebene angeordnet sind.

6. Optische Vorrichtung nach einem der vorhergehenden Ansprüche, wobei die optische Einheit (10) zur beugungsbegrenzten Abbildung der Sende- und Empfangselemente (32, 34, 36, 38, 40) ausgebildet ist, und/oder wobei die optische Einheit (10) als zentral kollimierende Optik ausgebildet ist.

7. Optische Vorrichtung nach einem der vorhergehenden Ansprüche, wobei wenigstens einige der Sende- und Empfangselemente (32, 34, 36, 38) auf der ersten Fläche (66) der wenigstens einen Fläche (66, 67) kreisförmig mit einem Radius (76) zu der optischen Achse (20) angeordnet sind, welcher wenigstens 30%, bevorzugt wenigstens 35%, besonders bevorzugt wenigstens 40%, ganz besonders bevorzugt wenigstens 45%, eines Radius einer Apertur der ausgesendeten Lichtstrahlen (52, 54, 56, 58, 60) an der zweiten optischen Linse (14) entspricht.

8. Optische Vorrichtung nach einem der vorhergehenden Ansprüche, wobei der jeweils ausgesendete Lichtkegel (53, 55, 57, 59, 61) eines der Sende- und Empfangselemente (32, 34, 36, 38, 40) die wenigstens eine erste optische Linse (12) auf einer Hälfte ihres Querschnitts, insbesondere zwischen Rand und optischer Achse (20), beleuchtet.

9. Optische Vorrichtung nach einem der vorhergehenden Ansprüche, wobei ein Abstand (22) zwischen der wenigstens einen zweiten optischen Linse (14) und der wenigstens einen ersten optischen Linse (12) so eingestellt vorgesehen ist, dass die Lichtkegel (53, 55, 57, 59, 61) der Sende- und Empfangselemente (32, 34, 36, 38, 40) ausgehend von der ersten optischen Linse (12) die zweite optische Linse (14) sich überdeckend zentral durchqueren, insbesondere mit einem hohen Füllfaktor von mindestens 50%, bevorzugt von mindestens 70%, besonders bevorzugt von mindestens 90% durchqueren.

10. Optische Vorrichtung nach einem der vorhergehenden Ansprüche, wobei die wenigstens eine erste optische Linse (12) asphärische Parameter aufweist, mit denen asymmetrische Abbildungsfehler der wenigstens einen zweiten optischen Linse (14) bei einer Abbildung der Sende- und Empfangselemente (32, 34, 36, 38, 40) kompensiert sind und/oder
wobei die wenigstens eine zweite optische Linse (14) asphärische Parameter aufweist, mit denen bei der Abbildung der Sende- und Empfangselemente (32, 34, 36, 38, 40) durch die wenigstens eine erste optische Linse (12) entstehende rotationssymmetrische Abbildungsfehler bei einer Abbildung der Sende- und Empfangselemente (32, 34, 36, 38) durch die wenigstens eine zweite optische Linse (14) kompensiert sind.

11. Optische Vorrichtung nach einem der vorhergehenden Ansprüche, wobei wenigstens ein Sende- und Empfangselement (40) der Sende- und Empfangseinheit (30) vorgesehen ist, dessen Lichtdurchtrittsfläche (50) die optische Achse (20) schneidet und im zweiten Abstand (64) zu der ersten optischen Linse (12) angeordnet ist, wobei der Lichtstrahl (60) des wenigstens einen Sende- und Empfangselements (40) nach Durchlaufen der optischen Einheit (10) kollimiert in Richtung der optischen Achse (20) ausgebildet ist, insbesondere
wobei das wenigstens eine Sende- und Empfangselement (40) zur Durchführung eines frequenzmodulierten Dauerstrich-LIDAR-Verfahrens vorgesehen ist.

12. Optische Vorrichtung nach einem der vorhergehenden Ansprüche, wobei die gekrümmte Fläche (66, 67), in welcher die Lichtdurchtrittsfläche (42, 44, 46, 48, 50) der Sende- und Empfangselemente (32, 34, 36, 38, 40) angeordnet ist, die optische Achse (20) schräg, insbesondere unter einem Winkel zwischen 1° und 89°, schneidet.

13. Optische Vorrichtung nach einem der vorhergehenden Ansprüche, wobei die Sende- und Empfangselemente (32, 34, 36, 38, 40) als Lichtdurchtrittsflächen (42, 44, 46, 48, 50) abgeschrägte Enden von Lichtleitfasern (33, 35, 37, 39, 41) aufweisen.

14. System (200) für Laser-Doppler-Anemometrie, wenigstens umfassend eine optische Vorrichtung (100) nach einem der vorhergehenden Ansprüche.

15. System (300) für LIDAR-Messungen, wenigstens umfassend eine optische Vorrichtung (100) nach einem der Ansprüche 1 bis 13.

16. System (400) für kombinierte Laser-Doppler-Anemometrie und LIDAR-Messungen, wenigstens umfassend eine optische Vorrichtung (100) nach einem der Ansprüche 1 bis 13.

## Claims

1. Optical device (100) for near and distance imaging, comprising
an optical unit (10) having at least one first optical lens (12) and at least one second optical lens (14), wherein the at least one first optical lens (12) and at least one second optical lens (14) are arranged along an optical axis (20),
a transmitting and receiving unit (30) having at least one, in particular substantially punctiform, transmitting and receiving element (32, 34, 36, 38, 40) for emitting and receiving light beams (52, 54, 56, 58, 60) through the optical unit (10), wherein a light passage surface (42, 44, 46, 48, 50) of the at least one transmitting and receiving element (32, 34, 36, 38, 40) is arranged in or intersects at least one planar or curved surface (66, 67),
wherein the optical unit (10) is in the form of a ring-shapedly re-imaging optics unit,
wherein along the optical axis (20) a first distance (62) between a first surface (66) of the at least one surface (66, 67) and the at least one first optical lens (12) is provided in a manner set so that, during intended normal operation, more than one transmitting and receiving element (32, 34, 36, 38) of the transmitting and receiving unit (30) is imaged onto a distant imaging surface (16) by the optical unit (10), wherein the transmitting and receiving elements (32, 34, 36, 38) are arranged on the first surface (66) at a radial distance (74) from the optical axis (20) which corresponds to at least 30% of a radius of an aperture of the emitted light beams (52, 54, 56, 58) at the second optical lens (14).

2. Optical device according to Claim 1, wherein along the optical axis (20) a second distance (64), different from the first distance (62), between a second surface (67) of the at least one surface (67) of the transmitting and receiving elements (40) and the at least one first optical lens (12) is provided in a manner set so that, during intended normal operation, the light beam (60) emitted by the transmitting and receiving elements (40) is formed so as to be collimated at least downstream of the second lens (14).

3. Optical device according to Claim 2, wherein a plurality of transmitting and receiving elements (32, 34, 36, 38, 40) are provided, which are arranged on the at least two surfaces (66, 67) which are different along the optical axis (20), wherein the second distance (64) is smaller than the first distance (62).

4. Optical device according to any of the preceding claims, wherein the at least one surface (66, 67) in which the light passage surfaces (42, 44, 46, 48, 50) of the transmitting and receiving elements (32, 34, 36, 38, 40) are arranged is in curved form and is curved away from the optical unit (10), or wherein the at least one surface (66, 67) is in planar form, in particular wherein the at least one planar surface (66, 67) is arranged perpendicular to the optical axis (20).

5. Optical device according to Claim 4, wherein intersection points of the light passage surfaces (42, 44, 46, 48, 50) of the transmitting and receiving elements (32, 34, 36, 38, 40) with the at least one curved surface (66, 67) are arranged in a plane.

6. Optical device according to any of the preceding claims, wherein the optical unit (10) is configured for the diffraction-limited imaging of the transmitting and receiving elements (32, 34, 36, 38, 40), and/or wherein the optical unit (10) is in the form of a centrally collimating optics unit.

7. Optical device according to any of the preceding claims, wherein at least some of the transmitting and receiving elements (32, 34, 36, 38) are arranged on the first surface (66) of the at least one surface (66, 67) in a circular manner with a radius (76) with respect to the optical axis (20) which corresponds to at least 30%, preferably at least 35%, particularly preferably at least 40%, very particularly preferably at least 45%, of a radius of an aperture of the emitted light beams (52, 54, 56, 58, 60) at the second optical lens (14).

8. Optical device according to any of the preceding claims, wherein the respectively emitted light cone (53, 55, 57, 59, 61) of one of the transmitting and receiving elements (32, 34, 36, 38, 40) illuminates the at least one first optical lens (12) on a half of its cross section, in particular between edge and optical axis (20).

9. Optical device according to any of the preceding claims, wherein a distance (22) between the at least one second optical lens (14) and the at least one first optical lens (12) is provided in a manner set so that the light cones (53, 55, 57, 59, 61) of the transmitting and receiving elements (32, 34, 36, 38, 40), proceeding from the first optical lens (12), centrally pass through the second optical lens (14) in an overlapping manner, in particular with a high fill factor of at least 50%, preferably of at least 70%, particularly preferably of at least 90%.

10. Optical device according to any of the preceding claims, wherein the at least one first optical lens (12) has aspherical parameters used to compensate for asymmetrical imaging aberrations of the at least one second optical lens (14) upon imaging of the transmitting and receiving elements (32, 34, 36, 38, 40), and/or
wherein the at least one second optical lens (14) has aspherical parameters with which rotationally symmetrical imaging aberrations that arise upon the imaging of the transmitting and receiving elements (32, 34, 36, 38, 40) by the at least one first optical lens (12) are compensated for upon imaging of the transmitting and receiving elements (32, 34, 36, 38) by the at least one second optical lens (14).

11. Optical device according to any of the preceding claims, wherein at least one transmitting and receiving element (40) of the transmitting and receiving unit (30) is provided, the light passage surface (50) of which intersects the optical axis (20) and is arranged at the second distance (64) from the first optical lens (12), wherein the light beam (60) of the at least one transmitting and receiving element (40) is formed so as to be collimated in the direction of the optical axis (20) after passing through the optical unit (10), in particular
wherein the at least one transmitting and receiving element (40) is provided for carrying out a frequency-modulated continuous-wave LIDAR method.

12. Optical device according to any of the preceding claims, wherein the curved surface (66, 67) in which the light passage surface (42, 44, 46, 48, 50) of the transmitting and receiving elements (32, 34, 36, 38, 40) is arranged intersects the optical axis (20) obliquely, in particular at an angle of between 1° and 89°.

13. Optical device according to any of the preceding claims, wherein the transmitting and receiving elements (32, 34, 36, 38, 40) have, as light passage surfaces (42, 44, 46, 48, 50), bevelled ends of optical fibres (33, 35, 37, 39, 41).

14. System (200) for laser Doppler anemometry, at least comprising an optical device (100) according to any of the preceding claims.

15. System (300) for LIDAR measurements, at least comprising an optical device (100) according to any of Claims 1 to 13.

16. System (400) for combined laser Doppler anemometry and LIDAR measurements, at least comprising an optical device (100) according to any of Claims 1 to 13.

## Revendications

1. Dispositif optique (100) destiné à la représentation proche et à distance, comprenant
une unité optique (10) comprenant au moins une première lentille optique (12) et au moins une deuxième lentille optique (14), l'au moins une première lentille optique (12) et l'au moins une deuxième lentille optique (14) étant disposées le long d'un axe optique (20),
une unité d'émission et de réception (30) comprenant au moins un élément d'émission et de réception (32, 34, 36, 38, 40), en particulier sensiblement en forme de point, pour émettre et recevoir des rayons lumineux (52, 54, 56, 58, 60) à travers l'unité optique (10), une surface de passage de la lumière (42, 44, 46, 48, 50) de l'au moins un élément d'émission et de réception (32, 34, 36, 38, 40) étant disposée dans au moins une surface plane ou courbe (66, 67) ou croisant celle-ci,
l'unité optique (10) étant réalisée sous la forme d'une optique de reproduction d'image annulaire,
une première distance (62) étant prévue et réglée le long de l'axe optique (20) entre une première surface (66) de l'au moins une surface (66, 67) et l'au moins une première lentille optique (12) de telle sorte que, dans le fonctionnement normal conforme à la destination prévue, plus d'un élément d'émission et de réception (32, 34, 36, 38) de l'unité d'émission et de réception (30) est reproduit par l'unité optique (10) sur une surface de représentation distante (16), les éléments d'émission et de réception (32, 34, 36, 38) étant disposés sur la première surface (66) à une distance radiale (74) de l'axe optique (20) qui correspond à au moins 30 % d'un rayon d'une ouverture des faisceaux lumineux (52, 54, 56, 58) émis au niveau de la deuxième lentille optique (14).

2. Dispositif optique selon la revendication 1, une deuxième distance (64) différente de la première distance (62) étant prévue et réglée le long de l'axe optique (20) entre une deuxième surface (67) de l'au moins une surface (67) des éléments d'émission et de réception (40) et l'au moins une première lentille optique (12), de telle sorte que, dans le fonctionnement normal conforme à la destination prévue, le faisceau lumineux (60) émis par les éléments d'émission et de réception (40) soit formé collimaté au moins après la deuxième lentille (14).

3. Dispositif optique selon la revendication 2, plusieurs éléments d'émission et de réception (32, 34, 36, 38, 40) étant présents, lesquels sont disposés sur les au moins deux surfaces (66, 67) différentes le long de l'axe optique (20), la deuxième distance (64) étant inférieure à la première distance (62).

4. Dispositif optique selon l'une des revendications précédentes, l'au moins une surface (66, 67) dans laquelle sont disposées les surfaces de passage de la lumière (42, 44, 46, 48, 50) des éléments d'émission et de réception (32, 34, 36, 38, 40) étant de configuration bombée et étant courbée à l'écart de l'unité optique (10), ou l'au moins une surface (66, 67) étant de configuration plane, en particulier l'au moins une surface (66, 67) plane étant disposée perpendiculairement à l'axe optique (20).

5. Dispositif optique selon la revendication 4, les points d'intersection des surfaces de passage de la lumière (42, 44, 46, 48, 50) des éléments d'émission et de réception (32, 34, 36, 38, 40) avec l'au moins une surface courbe (66, 67) étant disposés dans un même plan.

6. Dispositif optique selon l'une des revendications précédentes, l'unité optique (10) étant configurée pour la représentation limitée par diffraction des éléments d'émission et de réception (32, 34, 36, 38, 40) et/ou l'unité optique (10) étant réalisée sous la forme d'une optique à collimation centrale.

7. Dispositif optique selon l'une des revendications précédentes, au moins certains des éléments d'émission et de réception (32, 34, 36, 38) étant disposés sur la première surface (66) de l'au moins une surface (66, 67) de manière circulaire avec un rayon (76) par rapport à l'axe optique (20), lequel est d'au moins 30 %, de préférence d'au moins 35 %, de manière particulièrement préférée d'au moins 40 %, et de manière tout particulièrement préférée d'au moins 45 %, d'un rayon d'une ouverture des faisceaux lumineux (52, 54, 56, 58, 60) émis au niveau de la deuxième lentille optique (14).

8. Dispositif optique selon l'une des revendications précédentes, le cône lumineux (53, 55, 57, 59, 61) respectivement émis par l'un des éléments d'émission et de réception (32, 34, 36, 38, 40) éclairant l'au moins une première lentille optique (12) sur une moitié de sa section transversale, notamment entre le bord et l'axe optique (20).

9. Dispositif optique selon l'une des revendications précédentes, une distance (22) entre l'au moins une deuxième lentille optique (14) et l'au moins une première lentille optique (12) étant prévue et réglée de telle sorte que les cônes lumineux (53, 55, 57, 59, 61) des éléments d'émission et de réception (32, 34, 36, 38, 40) partant de la première lentille optique (12) traversent la deuxième lentille optique (14) de manière centrale en se recouvrant, notamment avec un facteur de remplissage élevé d'au moins 50 %, de préférence d'au moins 70 %, de manière particulièrement préférée d'au moins 90 %.

10. Dispositif optique selon l'une des revendications précédentes, l'au moins une première lentille optique (12) présentant des paramètres asphériques avec lesquels sont compensées les aberrations asymétriques de l'au moins une deuxième lentille optique (14) lors d'une représentation des éléments d'émission et de réception (32, 34, 36, 38, 40) et/ou
l'au moins une deuxième lentille optique (14) présentant des paramètres asphériques avec lesquels, lors de la représentation des éléments d'émission et de réception (32, 34, 36, 38, 40) par l'au moins une première lentille optique (12), sont compensées les aberrations à symétrie de rotation qui se produisent lors d'une représentation des éléments d'émission et de réception (32, 34, 36, 38) par l'au moins une deuxième lentille optique (14).

11. Dispositif optique selon l'une des revendications précédentes, au moins un élément d'émission et de réception (40) de l'unité d'émission et de réception (30) étant présent, dont la surface de passage de la lumière (50) croise l'axe optique (20) et est disposée à la deuxième distance (64) par rapport à la première lentille optique (12), le faisceau lumineux (60) de l'au moins un élément d'émission et de réception (40) étant formé, après avoir traversé l'unité optique (10), de manière collimatée en direction de l'axe optique (20), en particulier
l'au moins un élément d'émission et de réception (40) étant prévu pour mettre en œuvre un procédé LIDAR à onde continue modulée en fréquence.

12. Dispositif optique selon l'une des revendications précédentes, la surface courbe (66, 67) dans laquelle est disposée la surface de passage de la lumière (42, 44, 46, 48, 50) des éléments d'émission et de réception (32, 34, 36, 38, 40) croisant l'axe optique (20) obliquement, notamment sous un angle compris entre 1° et 89°.

13. Dispositif optique selon l'une des revendications précédentes, les éléments d'émission et de réception (32, 34, 36, 38, 40) possédant, en tant que surfaces de passage de la lumière (42, 44, 46, 48, 50), des extrémités biseautées de fibres optiques (33, 35, 37, 39, 41).

14. Système (200) pour anémométrie laser Doppler, comprenant au moins un dispositif optique (100) selon l'une des revendications précédentes.

15. Système (300) pour mesures LIDAR, comprenant au moins un dispositif optique (100) selon l'une des revendications 1 à 13.

16. Système (400) pour anémométrie laser Doppler et mesures LIDAR combinées, comprenant au moins un dispositif optique (100) selon l'une des revendications 1 à 13.
